# EUROPEAN PATENT APPLICATION

(11) **EP 4 697 475 A1**
(43) Date of publication of application: **18.02.2026**
(21) Application number: 24822187.1
(22) Date of filing: 08.01.2024
(51) Int. Cl.: H01M 50/333

(54) **BATTERY CELL, BATTERY, AND ELECTRIC DEVICE**

(30) Priority: 16.06.2023 CN 202321551506 U
(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); SU, Huasheng, Ningde, Fujian 352100 (CN); LI, Quankun, Ningde, Fujian 352100 (CN); JIN, Haizu, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/071185
(87) International publication number: WO 2024/255226

(57) **Abstract**

The present application provides a battery cell, a battery, and an electric apparatus, and pertains to the field of battery technologies. The battery cell includes a housing, an electrode assembly, a one-way valve assembly, and a protective patch. The housing has a wall portion, and the electrode assembly is accommodated within the housing. The one-way valve assembly is disposed on the wall portion, where the one-way valve assembly has a discharge port, and the discharge port is configured to release gas from inside the housing. The protective patch is disposed on a side of the wall portion facing away from the electrode assembly, where the protective patch is provided with an information collection hole penetrating through the protective patch, with the projection of the information collection hole in the thickness direction of the wall portion located within the one-way valve assembly and the protective patch covering the discharge port. The information collection hole is disposed such that its projection in the thickness direction of the wall portion is located within the one-way valve assembly and covers the discharge port, enabling the discharge port to be concealed by the protective patch, improving the aesthetic appearance of the outer surface of the battery cell, and reducing the risk that impurities or particles from the external environment enter the discharge port and cause blockages in the one-way valve assembly.

## Description

### CROSS-REFERENCE TO RELATED APPLICATIONS

The present application claims priority to Chinese Patent Application No. 2023215515062, filed on June 16, 2023 and entitled "BATTERY CELL, BATTERY, AND ELECTRIC APPARATUS," which is incorporated herein by reference in its entirety.

### TECHNICAL FIELD

The present application relates to the field of battery technologies, and more particularly, to a battery cell, a battery, and an electric apparatus.

### BACKGROUND

In recent years, new energy vehicles have undergone rapid development. In the field of electric vehicles, power batteries, as the power source of electric vehicles, play an irreplaceable and significant role. With the widespread promotion of new energy vehicles, the demand for power battery products has been increasingly growing. As a core component of new energy vehicles, the battery is subject to high requirements for both operational reliability and service life.

In battery technology, to ensure the safety of a battery cell, a pressure relief mechanism is typically provided on the housing of the battery cell to release internal pressure of the battery cell. When the internal pressure or temperature of the battery cell reaches a threshold, the pressure relief mechanism is actuated to release the internal pressure. However, in existing battery cells, the pressure relief mechanism may be actuated prematurely to release pressure during use, resulting in poor operational stability of the battery cell, which is detrimental to improving the service life and operational reliability of the battery cell.

### SUMMARY

Embodiments of the present application provide a battery cell, a battery, and an electric apparatus, so as to effectively enhance the service life and operational reliability of the battery cell.

According to a first aspect, an embodiment of the present application provides a battery cell, including a housing, an electrode assembly, a one-way valve assembly, and a protective patch. The housing has a wall portion; the electrode assembly is accommodated within the housing; the one-way valve assembly is disposed on the wall portion, the one-way valve assembly has a discharge port, the discharge port is configured to discharge gas from inside the housing; and the protective patch is disposed on a side of the wall portion facing away from the electrode assembly; where the protective patch is provided with an information collection hole penetrating through the protective patch, a projection of the information collection hole in a thickness direction of the wall portion is located within the one-way valve assembly, and the protective patch covers the discharge port.

In the above technical solution, the one-way valve assembly is disposed on the wall portion of the housing, enabling the one-way valve assembly to open unidirectionally to discharge gas from inside the housing to the outside of the housing through the discharge port. This allows gas generated inside the housing during normal operation of the battery cell to be released through the one-way valve assembly to the outside of the housing, so as to alleviate the issue that the internal pressure of the battery cell reaches a threshold prematurely due to rising internal gas pressure, thereby effectively enhancing the operational stability of the battery cell and improving its service life and operational reliability. In addition, a protective patch is disposed on the side of the wall portion facing away from the electrode assembly, thus serving to protect the wall portion. An information collection hole is formed in the protective patch, with the projection of the information collection hole in the thickness direction of the wall portion located within the one-way valve assembly and the protective patch covering the discharge port of the one-way valve assembly, such that the information collection hole is disposed in correspondence with the one-way valve assembly and covers the discharge port. This allows the discharge port to be concealed by the protective patch, which is advantageous for enhancing the aesthetic appearance of the outer surface of the battery cell; and in addition, the risk that impurities, particles, or the like from the external environment enter the discharge port and cause blockages in the one-way valve assembly can be reduced by covering the discharge port with the protective patch, which is advantageous for improving the operational reliability of the battery cell. Furthermore, the one-way valve assembly is disposed in correspondence with the information collection hole of the protective patch, such that the region of the battery cell for gas discharge through the one-way valve assembly can be disposed in correspondence with the region of the protective patch where the information collection hole is disposed, thereby saving space on the outer surface of the housing occupied by the information collection hole and the one-way valve assembly, which is advantageous for improving the integration of the battery cell.

In some embodiments, the one-way valve assembly forms an exposed surface at a position corresponding to the information collection hole, the exposed surface being a flat surface.

In the above technical solution, the exposed surface formed by the one-way valve assembly corresponding to the information collection hole is configured as a flat surface, so as to facilitate providing an information code or connecting a component such as a detection element for sampling on the exposed surface of the flat structure and to further enhance the aesthetic appearance of the outer surface of the battery cell.

In some embodiments, in the thickness direction of the wall portion, the wall portion has a first surface facing away from the electrode assembly, the first surface being flush with the exposed surface.

In the above technical solution, the exposed surface formed by the one-way valve assembly corresponding to the information collection hole is configured to be flush with the first surface of the wall portion facing away from the electrode assembly, which is advantageous for further enhancing the aesthetic appearance of the outer surface of the battery cell, and in addition, facilitates providing the protective patch on the side of the wall portion facing away from the electrode assembly, thereby reducing the difficulty of assembling the protective patch onto the wall portion and minimizing interference of the one-way valve assembly with the protective patch.

In some embodiments, the one-way valve assembly forms an exposed surface at a position corresponding to the information collection hole, the one-way valve assembly includes a one-way valve and a covering member, and the one-way valve is mounted on the wall portion, the one-way valve having a vent hole, where the vent hole is configured to discharge gas from inside the housing. The covering member is connected to the wall portion, where in the thickness direction of the wall portion, the covering member is located at an end of the one-way valve facing away from the electrode assembly, the covering member covers the one-way valve, and the covering member has a second surface facing away from the one-way valve, the second surface including the exposed surface. An exhaust passage is formed between the covering member and the wall portion, where the exhaust passage is in communication with the vent hole, and the discharge port in communication with the outside of the housing is formed at an end of the exhaust passage.

In the above technical solution, the one-way valve assembly is provided with a one-way valve and a covering member, and the one-way valve is configured to discharge gas from inside the housing through the vent hole. The covering member is disposed at the end of the one-way valve facing away from the electrode assembly and covers the one-way valve, forming the exposed surface on the second surface of the covering member facing away from the one-way valve and enabling the projection of the information collection hole of the protective patch in the thickness direction of the wall portion to be located within the second surface. The one-way valve assembly adopting such a structure facilitates disposing the information collection hole in correspondence with the covering member to form an exposed surface on the covering member, thereby enabling an information code or connect a component such as a detection element for sampling to be provided on the covering member, which is advantageous for reducing damage or pulling to the one-way valve caused by the information code or detection element. In addition, after the one-way valve is covered by the covering member, an exposed surface can be conveniently formed on the covering member, which is advantageous for reducing the difficulty of forming the exposed surface.

In some embodiments in the thickness direction of the wall portion, the wall portion has a first surface facing away from the electrode assembly, the first surface is provided with a mounting groove, a bottom surface of the mounting groove is provided with a mounting hole, at least a portion of the one-way valve is mounted within the mounting hole, and at least a portion of the covering member is accommodated within the mounting groove.

In the above technical solution, the mounting groove is disposed on the first surface of the wall portion facing away from the electrode assembly, and at least a portion of the covering member is accommodated within the mounting groove. This reduces the space occupied by the covering member and the wall portion in the thickness direction of the wall portion, which is advantageous for optimizing the volume of the battery cell, and in addition, the mounting groove can provide positioning and limiting functions for the covering member, which is advantageous for reducing the assembly difficulty of connecting the covering member to the wall portion.

In some embodiments, the exhaust passage includes a first exhaust gap formed between the covering member and a side surface of the mounting groove, with the discharge port formed at an end of the first exhaust gap away from the electrode assembly in the thickness direction of the wall portion.

In the above technical solution, the first exhaust gap in communication with the outside of the housing is formed between the covering member and the side surface of the mounting groove, with the discharge port formed at an end of the first exhaust gap away from the electrode assembly in the thickness direction of the wall portion, enabling gas discharged from the one-way valve to be released to the outside of the housing through the first exhaust gap. The battery cell adopting such a structure eliminates the need to form apertures in the covering member, which is advantageous for reducing processing difficulty, enhancing the aesthetic appearance of the battery cell, and facilitating coverage of the discharge port by the protective patch.

In some embodiments, the exhaust passage further includes a second exhaust gap formed between the covering member and the bottom surface of the mounting groove, with the second exhaust gap connecting the first exhaust gap to the vent hole.

In the above technical solution, the exhaust passage further includes a second exhaust gap formed between the covering member and the bottom surface of the mounting groove, where the second exhaust gap connects the first exhaust gap to the vent hole, so as to alleviate exhaust obstruction that may occur when the covering member abuts against the bottom surface of the mounting groove and blocks the communication between the vent hole and the first exhaust gap, thereby improving the smoothness of gas discharge from vent hole of the one-way valve to the first exhaust gap.

In some embodiments in the thickness direction of the wall portion, the covering member does not protrude beyond the first surface.

In the above technical solution, the covering member is configured to not protrude beyond the first surface of the wall portion facing away from the electrode assembly in the thickness direction of the wall portion, such that the mounting groove can provide a certain degree of protection to the covering member, further reducing wear on the covering member.

In some embodiments, the first surface is flush with the second surface.

In the above technical solution, the second surface of the covering member facing away from the one-way valve is configured to be flush with the first surface of the wall portion facing away from the electrode assembly, which is advantageous for further enhancing the aesthetic appearance of the outer surface of the battery cell and facilitates the formation of the exposed surface on the second surface of the covering member, and in addition, facilitates providing the protective patch on the side of the wall portion facing away from the electrode assembly, thereby reducing the difficulty of assembling the protective patch onto the wall portion.

In some embodiments, the one-way valve includes a valve body, an elastic member, and a sealing member. The valve body is mounted on the wall portion, where a mounting cavity is formed inside the valve body, and the valve body is provided with an inlet hole and the vent hole, with the inlet hole connecting the mounting cavity to the inside of the housing and the vent hole connecting the mounting cavity to the exhaust passage. The elastic member is disposed within the mounting cavity. The sealing member is movably disposed within the mounting cavity and is configured to seal the inlet hole under the action of the elastic member and to open the inlet hole under the action of gas inside the housing.

In the above technical solution, the one-way valve includes a valve body, an elastic member, and a sealing member, where the valve body is disposed on the wall portion, with the valve body provided with an inlet hole connecting the mounting cavity to the inside of the housing and a vent hole connecting the mounting cavity to the exhaust passage. Both the elastic member and the sealing member are disposed within the mounting cavity, enabling the elastic member to apply an elastic force to the sealing member to seal the inlet hole, preventing gas outside the housing from entering the inside of the housing. When the internal pressure of the housing rises, gas inside the housing can act on the sealing member and overcome the elastic force of the elastic member, enabling the sealing member to open the inlet hole, thereby enabling gas inside the housing to be discharged through the one-way valve, achieving the unidirectional exhaust function of the one-way valve.

In some embodiments, the valve body includes a valve main body and a valve cover. The valve main body is mounted on the wall portion and is provided with the inlet hole at an end close to the electrode assembly in the thickness direction of the wall portion. In the thickness direction of the wall portion, the valve cover is connected to an end of the valve main body facing away from the electrode assembly, the valve cover and the valve main body together enclose the mounting cavity, the valve cover and the sealing member are spaced apart, two ends of the elastic member respectively abut against the valve cover and the sealing member, and the valve cover is provided with the vent hole.

In the above technical solution, the valve body of the one-way valve includes a valve main body and a valve cover. The valve cover is connected to the end of the valve main body facing away from the electrode assembly in the thickness direction of the wall portion, enabling the valve cover and the valve main body to jointly define the mounting cavity for accommodating the elastic member and the sealing member. The one-way valve adopting such a structure divides the valve body into two parts, facilitating the assembly of the elastic member and the sealing member into the mounting cavity, which is advantageous for reducing the assembly difficulty of the one-way valve. In addition, the valve cover and the sealing member are configured to be spaced apart in the thickness direction of the wall portion, enabling two ends of the elastic member to respectively abut against the valve cover and the sealing member, such that the sealing member can seal, in the thickness direction of the wall portion, the inlet hole disposed at the end of the valve main body facing the electrode assembly in the thickness direction of the wall portion under the action of the elastic member. The one-way valve adopting such a structure facilitates the elastic member in applying an elastic force to the sealing member to seal the inlet hole and reduces the assembly difficulty of the elastic member.

In some embodiments, the one-way valve assembly forms an exposed surface at a position corresponding to the information collection hole, the one-way valve assembly includes a one-way valve, and the one-way valve is mounted on the wall portion, the one-way valve having the discharge port; where in the thickness direction of the wall portion, the exposed surface is formed at an end of the one-way valve facing away from the electrode assembly.

In the above technical solution, the one-way valve assembly includes a one-way valve, and the one-way valve has a discharge port, enabling the one-way valve to directly discharge gas from inside the housing through the discharge port. An exposed surface is formed at an end of the one-way valve facing away from the electrode assembly, with the projection of the information collection hole of the protective patch in the thickness direction of the wall portion located directly within the one-way valve, such that the one-way valve is disposed in correspondence with the information collection hole in the thickness direction of the wall portion, enabling an information code or connect a component such as a detection element for sampling to be provided directly on the region of the one-way valve corresponding to the information collection hole. The structure is simple and easy to assemble, which is advantageous for reducing the assembly difficulty of the battery cell.

In some embodiments, the one-way valve includes a valve body, an elastic member, and a sealing member. The valve body is mounted on the wall portion, where a mounting cavity is formed inside the valve body, and the valve body is provided with an inlet hole and the discharge port, with the inlet hole connecting the mounting cavity to the inside of the housing and the discharge port connecting the mounting cavity to the outside of the housing. The elastic member is disposed within the mounting cavity. The sealing member is movably disposed within the mounting cavity and is configured to seal the inlet hole under the action of the elastic member and to open the inlet hole under the action of gas inside the housing. In the thickness direction of the wall portion, the exposed surface is formed at an end of the valve body facing away from the electrode assembly.

In the above technical solution, the one-way valve includes a valve body, an elastic member, and a sealing member, where the valve body is disposed on the wall portion, with the valve body provided with an inlet hole connecting the mounting cavity to the inside of the housing and a discharge port in communication with the outside of the housing. Both the elastic member and the sealing member are disposed within the mounting cavity, enabling the elastic member to apply an elastic force to the sealing member to seal the inlet hole, preventing gas outside the housing from entering the inside of the housing. When the internal pressure of the housing rises, gas inside the housing can act on the sealing member and overcome the elastic force of the elastic member, enabling the sealing member to open the inlet hole, thereby enabling gas inside the housing to be discharged through the one-way valve, achieving the unidirectional exhaust function of the one-way valve. In addition, the exposed surface is formed at the end of the valve body facing away from the electrode assembly in the thickness direction of the wall portion, with the projection of the information collection hole in the thickness direction of the wall portion directly located on the valve body, resulting in a simple structure that is easy to implement.

In some embodiments, the valve body includes a valve main body and a valve cover. The valve main body is mounted on the wall portion and is provided with the inlet hole at an end close to the electrode assembly in the thickness direction of the wall portion. In the thickness direction of the wall portion, the valve cover is connected to an end of the valve main body facing away from the electrode assembly, the valve cover has a third surface facing away from the electrode assembly, the third surface includes the exposed surface, the valve cover and the valve main body together enclose the mounting cavity, the valve cover and the sealing member are spaced apart, and two ends of the elastic member respectively abut against the valve cover and the sealing member, where the valve cover is provided with a vent hole, the vent hole is in communication with the mounting cavity, and the discharge port is formed at an end of the vent hole penetrating through the third surface; or a third exhaust gap is formed between the valve cover and the valve main body, the third exhaust gap is in communication with the mounting cavity, and the discharge port is formed at an end of the third exhaust gap away from the electrode assembly in the thickness direction of the wall portion.

In the above technical solution, the valve body is provided with a valve main body and a valve cover. The valve cover is connected to the end of the valve main body facing away from the electrode assembly, forming the exposed surface on the third surface of the valve cover facing away from the electrode assembly, where the projection of the information collection hole in the thickness direction of the wall portion is located within the third surface. This facilitates the formation of the exposed surface on the valve body and helps reduce the difficulty of forming the exposed surface on the valve body. In addition, the vent hole is provided on the valve cover, with the discharge port formed at an end of the vent hole penetrating through the third surface of the valve cover. The valve body adopting such a structure can reduce interference of the vent hole on the connection between the valve cover and the valve main body, which is advantageous for reducing the assembly difficulty of the valve cover and the valve main body. Similarly, a third exhaust gap is provided between the valve cover and the valve main body, with the discharge port formed at an end of the third exhaust gap away from the electrode assembly in the thickness direction of the wall portion. The valve body adopting such a structure facilitates coverage of the discharge port by the protective patch and helps reduce the difficulty of covering the discharge port with the protective patch.

In some embodiments in the thickness direction of the wall portion, the wall portion has a first surface facing away from the electrode assembly, the wall portion is provided with a mounting hole, the mounting hole penetrates through the first surface, and at least a portion of the valve main body is mounted within the mounting hole; where the third surface is flush with the first surface.

In the above technical solution, the third surface of the valve cover facing away from the electrode assembly is configured to be flush with the first surface of the wall portion facing away from the electrode assembly, which is advantageous for further enhancing the aesthetic appearance of the outer surface of the battery cell and facilitates the formation of the exposed surface on the third surface of the valve cover, and in addition, facilitates providing the protective patch on the side of the wall portion facing away from the electrode assembly, reducing the difficulty of assembling the protective patch onto the wall portion.

In some embodiments in the thickness direction of the wall portion, the valve main body does not protrude beyond the first surface.

In the above technical solution, the valve main body is configured to not protrude beyond the first surface of the wall portion facing away from the electrode assembly, thereby alleviating the issue of the valve main body protruding beyond the first surface of the wall portion, which is advantageous for enhancing the aesthetic appearance of the outer surface of the battery cell, and in addition, can reduce interference of the valve main body on the protective patch, thereby lowering the difficulty of assembling the protective patch onto the wall portion.

In some embodiments, the protective patch is provided with an adhesive layer at its side facing the wall portion, the adhesive layer bonding the protective patch to the wall portion; where the adhesive layer is provided with a first clearance hole at a position corresponding to the information collection hole, and in the thickness direction of the wall portion, projections of the information collection hole and the discharge port are both located within the first clearance hole.

In the above technical solution, an adhesive layer is provided on the side of the protective patch facing the wall portion, enabling the protective patch to be bonded to the wall portion through the adhesive layer, which is advantageous for reducing the assembly difficulty of the protective patch and enhancing the connection stability of the protective patch on the wall portion. In addition, the first clearance hole is disposed at the position of the adhesive layer corresponding to the information collection hole, with the projections of the information collection hole of the protective patch and the discharge port of the one-way valve assembly in the thickness direction of the wall portion both located within the first clearance hole, to reduce obstruction of the adhesive layer on the discharge port, such that gas discharged through the discharge port of the one-way valve assembly can pass through the gap between the protective patch and the wall portion into the information collection hole and then be discharged, thereby reducing the impact on exhaust through the one-way valve assembly while enabling the protective patch to be bonded to the wall portion.

In some embodiments, the housing includes a casing and an end cover. An accommodation cavity with an opening is formed within the casing, the accommodation cavity being configured to accommodate the electrode assembly; and the end cover closes the opening; where the end cover is the wall portion; or the casing includes the wall portion.

In the above technical solution, the wall portion of the housing is configured as the end cover of the housing configured to close the opening of the casing, facilitating the mounting of the one-way valve assembly on the end cover for the battery cell adopting such a structure, which is advantageous for reducing the assembly difficulty of the battery cell and improving its production efficiency. Similarly, the wall portion of the housing is configured as one wall of the casing, enabling the battery cell adopting such a structure to reduce the impact of stresses generated by the connection between the end cover and the casing on the one-way valve assembly, alleviating issues such as damage or connection failure in the one-way valve assembly, thereby enhancing the operational stability and service life of the battery cell.

According to a second aspect, an embodiment of the present application further provides a battery including the battery cell described above.

According to a third aspect, an embodiment of the present application further provides an electric apparatus including the battery cell described above, the battery cell being configured to supply electrical energy.

### BRIEF DESCRIPTION OF DRAWINGS

To more clearly illustrate the technical solutions of the embodiments of the present application, the drawings required for use in the embodiments are briefly described below. It should be understood that the following drawings illustrate only certain embodiments of the present application and should not be considered as limiting the scope. For those skilled in the art, other related drawings can be obtained based on these drawings without creative effort.
FIG. 1 is a schematic structural diagram of a vehicle according to some embodiments of the present application.
FIG. 2 is an exploded structural diagram of a battery according to some embodiments of the present application.
FIG. 3 is a schematic structural diagram of a battery cell according to some embodiments of the present application.
FIG. 4 is an exploded structural diagram of a battery cell according to some embodiments of the present application.
FIG. 5 is a partial cross-sectional view of a battery cell according to some embodiments of the present application.
FIG. 6 is an assembly schematic diagram of a protective patch and a covering member of a battery cell according to some embodiments of the present application.
FIG. 7 is a top view of a battery cell (with the protective patch removed) according to some embodiments of the present application.
FIG. 8 is a partial enlarged view of portion A of the battery cell shown in FIG. 7.
FIG. 9 is a schematic structural diagram of a covering member of a one-way valve assembly of a battery cell according to some embodiments of the present application.
FIG. 10 is a bottom view of a covering member of a one-way valve assembly of a battery cell according to some embodiments of the present application.
FIG. 11 is a schematic structural diagram of a one-way valve of a one-way valve assembly of a battery cell according to some embodiments of the present application.
FIG. 12 is an exploded structural diagram of a one-way valve of a one-way valve assembly of a battery cell according to some embodiments of the present application.
FIG. 13 is a cross-sectional view of a one-way valve of a one-way valve assembly of a battery cell according to some embodiments of the present application.
FIG. 14 is a partial cross-sectional view of a battery cell according to some further embodiments of the present application.
FIG. 15 is a partial cross-sectional view of an insulating member according to some embodiments of the present application.
FIG. 16 is a schematic diagram of the connection between a protective patch and an adhesive layer according to some embodiments of the present application.

Reference signs: 1000. vehicle; 100. battery; 10. box; 101. first box body; 102. second box body; 20. battery cell; 1. housing; 11. wall portion; 111. mounting hole; 1111. first hole segment; 1112. second hole segment; 112. first surface; 113. mounting groove; 1131. second corner surface; 1132. second side surface; 12. casing; 121. opening; 13. end cover; 2. electrode assembly; 21. tab; 3. one-way valve assembly; 31. discharge port; 32. exposed surface; 33. one-way valve; 331. vent hole; 332. valve body; 3321. mounting cavity; 3322. inlet hole; 3323. valve main body; 3323a. recessed groove; 3323b. connection portion; 3323c. stress relief groove; 3324. valve cover; 3324a. first guide post; 3324b. third surface; 333. elastic member; 334. sealing member; 3341. second guide post; 3342. pressing portion; 3342a. snap-fit groove; 3343. sealing portion; 3343a. snap-fit portion; 34. covering member; 341. second surface; 342. first corner surface; 343. first side surface; 344. fourth surface; 3441. first groove; 3442. second groove; 35. exhaust passage; 351. first exhaust gap; 352. second exhaust gap; 4. protective patch; 41. information collection hole; 42. second clearance hole; 43. third clearance hole; 5. electrode terminal; 6. pressure relief mechanism; 7. insulating member; 71. main body portion; 72. accommodating portion; 721. through hole; 722. first wall; 723. second wall; 8. adhesive layer; 81. first clearance hole; 200. controller; 300. motor; X. thickness direction of wall portion.

### DESCRIPTION OF EMBODIMENTS

To make the objectives, technical solutions, and advantages of the embodiments of the present application clearer, the technical solutions in the embodiments of the present application are described clearly below in conjunction with the drawings in the embodiments of the present application. It is apparent that the described embodiments are some, but not all, embodiments of the present application. Based on the embodiments in the present application, all other embodiments obtained by those skilled in the art without creative effort fall within the protection scope of the present application.

Unless otherwise defined, all technical and scientific terms used in the present application have the same meaning as commonly understood by those skilled in the technical field of the present application; terms used in the specification of the present application are for the purpose of describing specific embodiments only and are not intended to limit the present application; the terms "including" and "having" in the specification, claims, and the above description of the drawings of the present application, as well as any variations thereof, are intended to cover non-exclusive inclusion. The terms "first," "second," and the like in the specification, claims, or the above description of the drawings of the present application are used to distinguish different objects and not to describe a specific order or primary-secondary relationship.

Reference to "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

In the description of the present application, it should be noted that, unless otherwise explicitly specified and limited, the terms "mounted," "connected," "linked," and "coupled" should be understood in a broad sense, for example, as a fixed connection, a detachable connection, or an integral connection; a direct connection, an indirect connection through an intermediary, or an internal communication between two components. For those skilled in the art, the specific meanings of the above terms in the present application can be understood based on specific circumstances.

The term "and/or" in the present application is merely an associative relationship describing associated objects, indicating that three relationships may exist. For example, A and/or B may indicate: A alone, both A and B, or B alone. Additionally, the character "/" in the present application generally indicates an "or" relationship between the associated objects.

In the embodiments of the present application, identical reference signs denote identical components, and for brevity, detailed descriptions of identical components are omitted in different embodiments. It should be understood that the thickness, length, width, and other dimensions of various components in the embodiments of the present application shown in the drawings, as well as the overall thickness, length, width, and other dimensions of an integrated device, are for illustrative purposes only and should not constitute any limitation on the present application.

The term "plurality" appearing in the present application refers to two or more (including two).

In the embodiments of the present application, the battery cell may be a secondary battery, which refers to a battery cell that can be recharged to activate the active material and continue to be used after discharge.

The battery cell may be lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, and the like, and the embodiments of the present application are not limited thereto.

The battery cell generally includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, preventing short circuits between the positive electrode and the negative electrode while allowing active ions to pass through.

In some embodiments, the positive electrode may be a positive electrode plate, which may include a positive electrode current collector and a positive electrode active material disposed on at least one surface of the positive electrode current collector.

In an example, the positive electrode current collector has two surfaces opposite in its thickness direction, and the positive electrode active material is disposed on either or both of the two opposite surfaces of the positive electrode current collector.

In an example, the positive electrode current collector may be a metal foil or a composite current collector. For example, as a metal foil, materials such as silver-plated aluminum, silver-plated stainless steel, stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (for example, LiFePO₄ (LFP for short)), a composite of lithium iron phosphate and carbon, lithium manganese phosphate (for example, LiMnPO₄), a composite of lithium manganese phosphate and carbon, lithium iron manganese phosphate, and a composite of lithium iron manganese phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (also abbreviated as NCM₅₂₃), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and their modified compounds.

In some embodiments, the positive electrode may be a metal foam. The metal foam may be nickel foam, copper foam, aluminum foam, alloy foam, carbon foam, or the like. When metal foam is used as the positive electrode, the surface of the metal foam may not be provided with a positive electrode active material, or it may be provided with a positive electrode active material. In an example, lithium source material, potassium metal, or sodium metal may be filled or/and deposited within the metal foam, where the lithium source material is lithium metal and/or lithium-rich material.

In some embodiments, the negative electrode may be a negative electrode plate, which may include a negative electrode current collector.

In an example, the negative electrode current collector may be a metal foil, a metal foam, or a composite current collector. For example, as a metal foil, silver-plated aluminum or stainless steel, stainless steel, copper, aluminum, nickel, carbon electrode, carbon, nickel, or titanium may be used. The metal foam may be nickel foam, copper foam, aluminum foam, alloy foam, or carbon foam. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two surfaces opposite in its thickness direction, and the negative electrode active material is disposed on either or both of the two opposite surfaces of the negative electrode current collector.

In an example, the negative electrode active material may be negative electrode active materials well-known in the art and used for battery cells. In an example, the negative electrode active material may include at least one of the following materials: artificial graphite, natural graphite, soft carbon, hard carbon, silicon-based material, tin-based material, lithium titanate, and the like. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some implementations, the electrode assembly further includes a separator, and the separator is disposed between the positive electrode and the negative electrode.

In some implementations, the separator is a separator film. The separator film may be of various types and may be any well-known porous structure separator film with good chemical and mechanical stability.

In an example, the material of the separator film may include at least one of glass fiber, non-woven fabric, polyethylene, polypropylene, and polyvinylidene fluoride. The separator film may be a single-layer film or a multilayer composite film. When the separator film is a multilayer composite film, the materials of each layer may be the same or different. The separator may be a separate component located between the positive electrode and the negative electrode or may be attached to the surfaces of the positive electrode and the negative electrode.

In some implementations, the separator is a solid-state electrolyte. The solid-state electrolyte is disposed between the positive electrode and the negative electrode, serving both to conduct ions and to separate the positive electrode from the negative electrode.

In some implementations, the battery cell further includes an electrolyte, which conducts ions between the positive and negative electrodes. The electrolyte may be liquid, gel, or solid. The liquid electrolyte includes an electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone. The solvent may also be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as the skeleton network of the electrolyte, and is combined with an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte may include one or more of oxide solid electrolytes (crystalline perovskite, sodium superionic conductor, garnet, amorphous LiPON film), sulfide solid electrolytes (crystalline lithium superionic conductor (lithium germanium phosphorus sulfide, argyrodite), amorphous sulfide), halide solid electrolytes, nitride solid electrolytes, and hydride solid electrolytes.

In an example, the composite solid-state electrolyte is formed by adding inorganic solid-state electrolyte fillers to a polymer solid-state electrolyte.

In some implementations, the electrode assembly is a wound structure. The positive electrode plate and the negative electrode plate are wound to form a wound structure.

In some implementations, the electrode assembly is a laminated structure.

In an example, a plurality of positive electrode plates and negative electrode plates may be provided, and the plurality of positive electrode plates and negative electrode plates are alternately stacked.

In an example, a plurality of positive electrode plates may be provided, and the negative electrode plate may be folded to form a plurality of stacked folding segments, with a positive electrode plate clamped between adjacent folding segments.

In an example, both the positive electrode plate and the negative electrode plate may be folded to form a plurality of stacked folding segments.

In an example, a plurality of separators may be provided, respectively disposed between any adjacent positive electrode plate or negative electrode plate.

In an example, the separator may be continuously provided, disposed between any adjacent positive electrode plate or negative electrode plate by folding or winding.

In some implementations, the shape of the electrode assembly may be cylindrical, flat, prismatic, or the like.

In some implementations, the electrode assembly is provided with tabs, which can conduct current from the electrode assembly. The tabs include a positive tab and a negative tab.

In some implementations, the battery cell may include a housing. The housing is used to encapsulate the electrode assembly, electrolyte, and other components. The housing may be a steel housing, aluminum housing, plastic housing (for example, polypropylene), composite metal housing (for example, copper-aluminum composite housing), or aluminum-plastic film.

In an example, the battery cell may be a cylindrical battery cell, a prismatic battery cell, a pouch battery cell, or a battery cell of other shapes. Prismatic battery cells include, but are not limited to, cuboid battery cells, blade-shaped battery cells, and multi-prismatic batteries, such as hexagonal prismatic batteries.

The battery mentioned in the embodiments of the present application refers to a single physical module including one or more battery cells to provide higher voltage and capacity.

In some embodiments, the battery may be a battery module. When there are a plurality of battery cells, the plurality of battery cells are disposed and fixed to form a battery module.

In some embodiments, the battery may be a battery pack, including a box and battery cells, with the battery cells or battery modules accommodated within the box.

In some embodiments, the box may form part of the chassis structure of a vehicle. For example, a portion of the box may form at least part of the floor of the vehicle, or a portion of the box may form at least part of the crossbeams and longitudinal beams of the vehicle.

In some embodiments, the battery may be an energy storage apparatus. Energy storage apparatuses include energy storage containers, energy storage cabinets, and the like.

Batteries have outstanding advantages such as high energy density, low environmental pollution, high power density, long service life, wide adaptability, and low self-discharge coefficient, making them an important part of new energy development. The development of battery technology must consider a plurality of design factors simultaneously, such as energy density, cycle life, discharge capacity, charge-discharge rate, and other performance parameters, as well as battery safety. With the rapid development and increasing demand for batteries, the requirements for battery service life and operational reliability are also rising.

In battery technology, for general battery cells, to ensure operational safety, a pressure relief mechanism is typically provided on the housing of the battery cell to release internal pressure of the battery cell, thereby effectively enhancing the safety of the battery cell. In the related art, a battery cell generates a certain amount of gas during use, causing the gas pressure inside the housing of the battery cell to rise, which may lead to premature actuation of the pressure relief mechanism of the battery cell during use, resulting in poor operational stability of the battery cell and thus hindering improvements in its service life and operational reliability.

Based on the above considerations, to address the issues of short service life and low operational reliability of battery cells, embodiments of the present application provide a battery cell including a housing, an electrode assembly, a one-way valve assembly, and a protective patch. The housing has a wall portion, and the electrode assembly is accommodated within the housing. The one-way valve assembly is disposed on the wall portion, where the one-way valve assembly has a discharge port, and the discharge port is configured to discharge gas from inside the housing. The protective patch is disposed on a side of the wall portion facing away from the electrode assembly, where the protective patch is provided with an information collection hole penetrating through the protective patch, with the projection of the information collection hole in the thickness direction of the wall portion located within the one-way valve assembly and the protective patch covering the discharge port.

In this structure of the battery cell, the one-way valve assembly is disposed on the wall portion of the housing, enabling the one-way valve assembly to open unidirectionally to discharge gas from inside the housing to the outside of the housing through the discharge port. This allows gas generated inside the housing during normal operation of the battery cell to be released through the one-way valve assembly to the outside of the housing, so as to alleviate the issue that the internal pressure of the battery cell reaches a threshold prematurely due to rising internal gas pressure of the battery cell, causing premature actuation of the battery cell to release pressure, thereby effectively enhancing the operational stability of the battery cell and improving the service life and operational reliability of the battery cell.

In addition, a protective patch is disposed on the side of the wall portion facing away from the electrode assembly, thus serving to protect the wall portion. An information collection hole is formed in the protective patch, with the projection of the information collection hole in the thickness direction of the wall portion located within the one-way valve assembly and the protective patch covering the discharge port of the one-way valve assembly, such that the information collection hole is disposed in correspondence with the one-way valve assembly and covers the discharge port. This allows the discharge port to be concealed by the protective patch, which is advantageous for enhancing the aesthetic appearance of the outer surface of the battery cell; and in addition, the risk that impurities, particles, or the like from the external environment enter the discharge port and cause blockages in the one-way valve assembly can be reduced by covering the discharge port with the protective patch, which is advantageous for improving the operational reliability of the battery cell. Furthermore, the one-way valve assembly is disposed in correspondence with the information collection hole of the protective patch, such that the region of the battery cell for gas discharge through the one-way valve assembly can be disposed in correspondence with the region of the protective patch where the information collection hole is disposed, thereby saving space on the outer surface of the housing occupied by the information collection hole and the one-way valve assembly, which is advantageous for improving the integration of the battery cell.

The battery cells disclosed in the embodiments of the present application can be used, but are not limited to, in electric apparatuses such as vehicles, ships, or aircraft, as well as in energy storage apparatuses. The battery cell, battery, and the like disclosed in the present application may be used to constitute a power source system of the electric apparatus, which is advantageous for alleviating premature actuation of the valve for pressure relief during use of the battery cell, thereby enhancing the service life and operational reliability of the battery cell.

Embodiments of the present application provide an electric apparatus using a battery as a power source. The electric apparatus may include, but is not limited to, mobile phones, tablets, laptops, electric toys, electric tools, electric bicycles, electric vehicles, ships, and spacecraft. Electric toys may include fixed or mobile electric toys, such as game consoles, electric car toys, electric ship toys, and electric airplane toys. Spacecraft may include airplanes, rockets, space shuttles, spaceships, and the like.

For ease of description, the following embodiments are illustrated by taking a vehicle as an example of an electric apparatus in an embodiment of the present application.

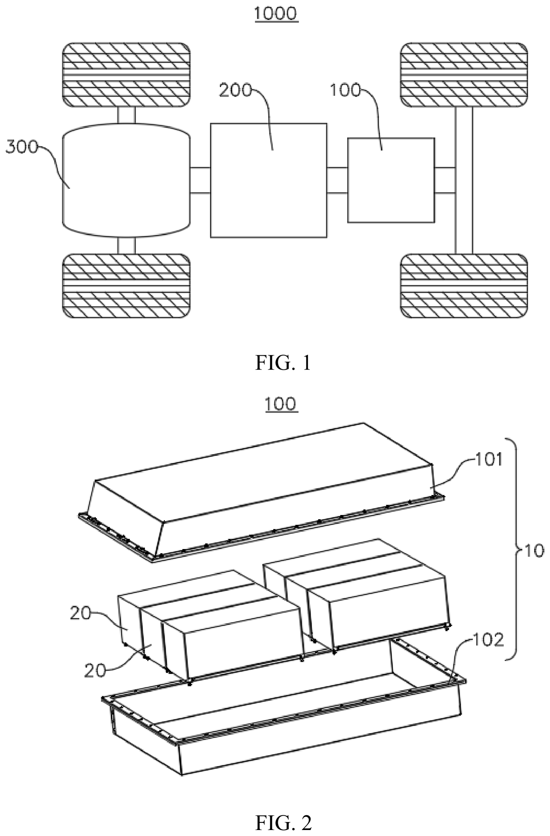

Referring to FIG. 1, FIG. 1 is a schematic structural diagram of a vehicle 1000 according to some embodiments of the present application. The vehicle 1000 may be a fuel vehicle, a gas vehicle, or a new energy vehicle, where the new energy vehicle may be a pure electric vehicle, a hybrid vehicle, or an extended-range vehicle. A battery 100 is provided inside the vehicle 1000, and the battery 100 may be disposed at the bottom, front, or rear of the vehicle 1000. The battery 100 may be used to supply power to the vehicle 1000. For example, the battery 100 may be used as an operational power supply for the vehicle 1000. The vehicle 1000 may further include a controller 200 and a motor 300, with the controller 200 controlling the battery 100 to supply power to the motor 300, for example, for the operational power requirements during startup, navigation, and driving of the vehicle 1000.

In some embodiments of this application, the battery 100 can serve not only as an operational power source for the vehicle 1000 but also as a driving power source for the vehicle 1000, replacing or partially replacing fossil fuel or natural gas to provide driving traction for the vehicle 1000.

Referring to FIG. 2, FIG. 2 is an exploded structural diagram of a battery 100 according to some embodiments of the present application. The battery 100 may include a box 10 and battery cells 20, and the battery cells 20 are accommodated within the box 10.

The box 10 is used to provide an assembly space for the battery cells 20 and may adopt various structures. In some embodiments, the box 10 may include a first box body 101 and a second box body 102, with the first box body 101 and the second box body 102 covering each other, jointly defining an assembly space for accommodating the battery cells 20. The second box body 102 may be a hollow structure with one open end, and the first box body 101 may be a plate-like structure, covering the open side of the second box body 102, such that the first box body 101 and the second box body 102 jointly define the assembly space. In other embodiments, the first box body 101 and the second box body 102 may both be hollow structures with one open side, with the open side of the first box body 101 covering the open side of the second box body 102. Of course, the box 10 formed by the first box body 101 and the second box body 102 may have various shapes, such as a cylinder or a cuboid. By way of example, in FIG. 2, the box 10 is a cuboid structure.

Optionally, in the battery 100, one or more battery cells 20 may be accommodated within the box 10. When a plurality of battery cells 20 are accommodated within the box 10, the plurality of battery cells 20 may be connected in series, parallel, or series and parallel, and being connected in series and parallel means a combination of series and parallel connections of the plurality of battery cells 20. The plurality of battery cells 20 may be directly connected in series, parallel, or series-parallel, and then a module as a whole formed by the plurality of battery cells 20 is accommodated within the box 10. Of course, in some embodiments, the battery 100 may be formed by a plurality of battery cells 20 being connected in series, parallel, or a series-parallel first to form a battery module, and then a plurality of battery modules being connected in series, parallel, or series-parallel to form an entirety which is accommodated within the box 10.

In some embodiments, the battery 100 may further include other structures. For example, the battery 10 may further include a busbar component that is disposed within the box 10 and connects a plurality of battery cells 20 to achieve electrical connection between the plurality of battery cells 20.

Each battery cell 20 may be a secondary battery or a primary battery, or may be a lithium-sulfur battery, sodium-ion battery, or magnesium-ion battery, without being limited thereto. The battery cell 20 may be cylindrical, flat, cuboid, or other shapes. By way of example, in FIG. 2, the battery cell 20 is a cuboid structure.

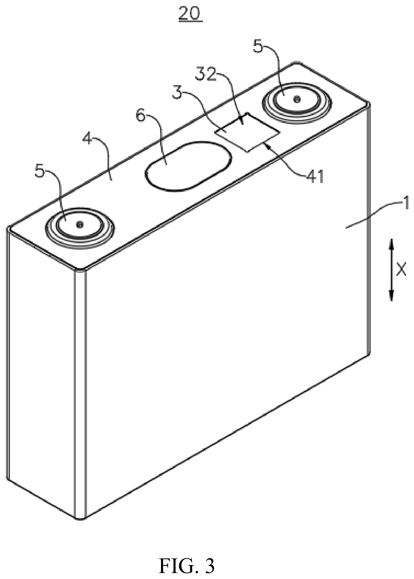

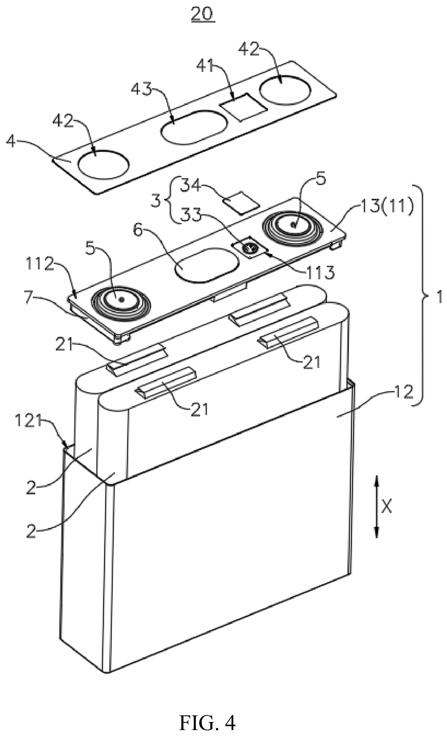

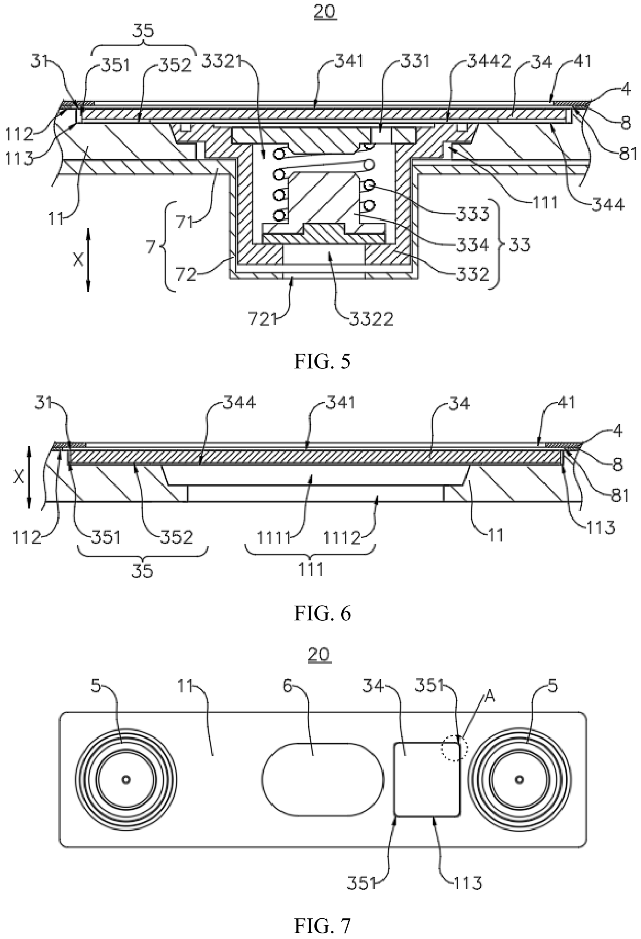

According to some embodiments of the present application, referring to FIG. 3, FIG. 4, and FIG. 5, where FIG. 3 is a schematic structural diagram of a battery cell 20 according to some embodiments of the present application, FIG. 4 is an exploded structural diagram of a battery cell 20 according to some embodiments of the present application, and FIG. 5 is a partial cross-sectional view of a battery cell 20 according to some embodiments of the present application, the present application provides a battery cell 20 including a housing 1, an electrode assembly 2, a one-way valve assembly 3, and a protective patch 4. The housing 1 has a wall portion 11, and the electrode assembly 2 is accommodated within the housing 1. The one-way valve assembly 3 is disposed on the wall portion 11, where the one-way valve assembly 3 has a discharge port 31, and the discharge port 31 is configured to discharge gas from inside the housing 1. The protective patch 4 is disposed on a side of the wall portion 11 facing away from the electrode assembly 2, where the protective patch 4 is provided with an information collection hole 41 penetrating through the protective patch 4, with the projection of the information collection hole 41 in the thickness direction X of the wall portion located within the one-way valve assembly 3 and the protective patch 4 covering the discharge port 31.

The housing 1 may also be used to accommodate an electrolyte, such as an electrolytic solution. The housing 1 may have various structural forms, such as a cylinder or a cuboid. Similarly, the material of the housing 1 may be various, such as copper, iron, aluminum, steel, or aluminum alloy.

In some embodiments, the housing 1 may include a casing 12 and an end cover 13, where an accommodation cavity is formed within the casing 12, the accommodation cavity being configured to accommodate the electrode assembly 2 and having an opening 121, that is, the casing 12 is a hollow structure with one opening 121. The end cover 13 covers the opening 121 of the casing 12 and forms a sealed connection to form a sealed space for accommodating the electrode assembly 2 and the electrolyte.

It should be noted that the wall portion 11 for mounting the one-way valve assembly 3 may be the end cover 13 of the housing 1, or may be one wall of the casing 12 of the housing 1. By way of example, in FIG. 4, the wall portion 11 is the end cover 13. Of course, the structure of the battery cell 20 is not limited to this. In other embodiments, the wall portion 11 may also be the bottom wall of the casing 12 opposite the end cover 13, or a side wall of the casing 12 adjacent to and connected with the end cover 13.

In assembling the battery cell 20, the electrode assembly 2 may be first placed into the casing 12, and an electrolyte solution may be filled into the casing 12, after which the end cover 13 is covered onto the opening 121 of the casing 12 to complete the assembly of the battery cell 20.

The casing 12 may have various shapes, such as a cylinder, cuboid, or prismatic structure. The shape of the casing 12 may be determined based on the specific shape of the electrode assembly 2. For example, if the electrode assembly 2 is a cylindrical structure, a cylindrical casing 12 may be used; and if the electrode assembly 2 is a cuboid structure, a cuboid casing 12 may be used. Of course, the structure of the end cover 13 may also be various, such as a plate-like structure or a hollow structure with one open end. By way of example, in FIG. 3, the casing 12 is a cuboid structure.

Of course, it is understandable that the housing 1 is not limited to the above structures. The housing 1 may also be of other structures, for example, the housing 1 may include a casing 12 and two end covers 13. The casing 12 is a hollow structure with openings 121 on opposite sides, and one end cover 13 covers one opening 121 of the casing 12 to form a sealed connection, forming a sealed space for accommodating the electrode assembly 2 and the electrolyte, that is, the casing 12 has openings 121 on opposite sides, and the two end covers 13 respectively cover the two sides of the casing 12 to close the corresponding openings 121.

It should be noted that the electrode assembly 2 is a component in the battery cell 20 where electrochemical reactions occur, and the structure of the electrode assembly 2 may be various. For example, the electrode assembly 2 may be a wound structure formed by winding a positive electrode plate, a separator, and a negative electrode plate, or a laminated structure formed by stacking a positive electrode plate, a separator, and a negative electrode plate.

By way of example, the separator is a separator film, and the main material of the separator film may be selected from at least one of glass fiber, non-woven fabric, polyethylene, polypropylene, and polyvinylidene fluoride.

Optionally, one or more electrode assembly 2 may be accommodated within the housing 1. By way of example, in FIG. 3, the housing 1 of the battery cell 20 is provided with two electrode assemblies 2, with the two electrode assemblies 2 stacked along their thickness direction, that is, the two electrode assemblies 2 are stacked in the thickness direction of the battery cell 20. Of course, in other embodiments, alternatively, one, three, four, five, six, seven, or eight electrode assemblies 2 may be accommodated within the housing 1.

It should be noted that the one-way valve assembly 3 is disposed on the wall portion 11, the one-way valve assembly 3 being configured to discharge gas from inside the housing 1, meaning the one-way valve assembly 3 can open unidirectionally for exhaust to enable gas inside the housing 1 to be discharged to the outside of the housing 1 through the one-way valve assembly 3. Optionally, the structure for disposing the one-way valve assembly 3 on the wall portion 11 may be various, such as welding the one-way valve assembly 3 to the wall portion 11, snap-fitting the one-way valve assembly 3 to the wall portion 11, or bonding the one-way valve assembly 3 to the wall portion 11. The outside of the housing 1 refers to the external environment of the battery cell 20.

By way of example, in FIG. 5, the wall portion 11 is provided with a mounting hole 111, the mounting hole 111 that connects the inside and outside of the housing 1. A portion of the one-way valve assembly 3 is assembled into the mounting hole 111 and extends into the inside of the housing 1 in the thickness direction X of the wall portion, with a sealed connection formed between the one-way valve assembly 3 and the wall surface of the mounting hole 111. It should be noted that the mounting hole 111 may be directly connected to the outside of the housing 1, meaning the mounting hole 111 extends through the first surface 112 of the wall portion 11 facing away from the electrode assembly 2. The mounting hole 111 may alternatively be indirectly connected to the outside of the housing 1. By way of example, in FIG. 4 and FIG. 5, the first surface 112 of the wall portion 11 facing away from the electrode assembly 2 is provided with a mounting groove 113, and the mounting hole 111 is provided on the bottom surface of the mounting groove 113, such that the mounting hole 111 is indirectly connected to the outside of the housing 1 through the mounting groove 113.

The one-way valve assembly 3 has a discharge port 31, the discharge port 31 being configured to discharge gas from inside the housing 1, meaning the one-way valve assembly 3 has a discharge port 31 connected to the outside of the housing 1, enabling gas inside the housing 1 to be discharged to the outside of the housing 1 through the discharge port 31 of the one-way valve assembly 3.

The protective patch 4 is disposed on the side of the wall portion 11 facing away from the electrode assembly 2 to protect the wall portion 11, thereby reducing scratching or wear on the wall portion 11. The structure for mounting the protective patch 4 on the wall portion 11 may be various, such as adhesive bonding or snap-fitting.

The protective patch 4 covers the discharge port 31 of the one-way valve assembly 3, meaning the projection of the discharge port 31 in the thickness direction X of the wall portion is located within the protective patch 4, enabling the protective patch 4 to cover and conceal the discharge port 31. This means that, in the thickness direction X of the wall portion, the discharge port 31 is not disposed in correspondence with the information collection hole 41, and the projection of the discharge port is not within the information collection hole 41.

The protective patch 4 is provided with an information collection hole 41 penetrating through the protective patch 4, with the projection of the information collection hole 41 in the thickness direction X of the wall portion located within the one-way valve assembly 3, meaning the protective patch 4 is provided with an information collection hole 41 that extends through the protective patch 4 in the thickness direction X of the wall portion, and the information collection hole 41 is disposed in correspondence with the one-way valve assembly 3, allowing an information code disposed on the one-way valve 3 to be viewed or a detection element for sampling to be connected on the one-way valve assembly 3 through the information collection hole 41.

It should be noted that the information code may be a QR code, barcode, number, or text, and information about the battery cell 20 can be obtained by scanning or manually entering the information code. The detection element may include a circuit board and a sampling terminal electrically connected to the circuit board, the sampling terminal including a metal sheet (for example, nickel sheet), a temperature sensor, and the like.

Optionally, the material of the protective patch 4 is an insulating material. This enables the protective patch 4 to protect the outer side of the wall portion 11, reducing scratching on the wall portion 11 while also providing insulation and isolation between the wall portion 11 and other components in the external environment, which is advantageous for reducing the risk of short circuits. By way of example, the material of the protective patch 4 may be rubber, silicone, plastic, or resin.

In some embodiments, the battery cell 20 may further include an electrode terminal 5, the electrode terminal 5 being insulatedly mounted on the housing 1 and electrically connected to the electrode assembly 2 to output or input electrical energy of the battery cell 20.

It should be noted that the electrode terminal 5 is insulatedly mounted on the housing 1, that is, no electrical connection is formed between the electrode terminal 5 and the housing 1.

In FIG. 3, the battery cell 20 includes two electrode terminals 5, and correspondingly, each electrode assembly 2 has two tabs 21 with opposite polarities. The two electrode terminals 5 are respectively electrically connected to the two tabs 21 of the electrode assembly 2 to achieve the input or output of the positive and negative electrodes of the battery cell 20. It should be noted that the tab 21 of the electrode assembly 2 is a component formed by stacking and connecting regions of the positive electrode plate not coated with positive electrode active substance layer or regions of the negative electrode plate not coated with negative electrode active substance layer. If the tab 21 is used as the positive electrode of the output electrode assembly 2, the tab 21 is a component formed by stacking and connecting regions of the positive electrode plate not coated with positive electrode active substance layer; and if the tab 21 is used as the negative electrode of the output electrode assembly 2, the tab 21 is a component formed by stacking and connecting regions of the negative electrode plate not coated with negative electrode active substance layer.

By way of example, the material of the electrode terminals 5 may be various, such as copper, iron, aluminum, steel, or aluminum alloy.

The structure for mounting the electrode terminals 5 on the housing 1 may be various. By way of example, in FIG. 3, both electrode terminals 5 are mounted on the end cover 13 of the housing 1. Of course, the structure of the battery cell 20 is not limited thereto. In other embodiments, both electrode terminals 5 may be mounted on the casing 12 of the housing 1, or one electrode terminal 5 may be mounted on the casing 12 of the housing 1, and the other electrode terminal 5 may be mounted on the end cover 13 of the housing 1.

By way of example, in FIG. 3 and FIG. 4, both electrode terminals 5 are disposed on the wall portion 11, and correspondingly, in the thickness direction X of the wall portion, the protective patch 4 is provided with a second clearance hole 42 at a position corresponding to the electrode terminal 5, the second clearance hole 42 penetrating through both sides of the protective patch 4 and being configured to allow the electrode terminal 5 to pass through, providing clearance for the electrode terminal 5. The wall portion 11 is provided with two electrode terminals 5, and correspondingly, the protective patch 4 is provided with two second clearance holes 42, each second clearance hole 42 being configured to allow one electrode terminal 5 to pass through.

In some embodiments, the battery cell 20 may further include a pressure relief mechanism 6 mounted on the housing 1. Optionally, the pressure relief mechanism 6 may be disposed on the end cover 13 or the casing 12 of the housing 1 and configured to release the internal pressure of the battery cell 20 when the internal pressure or temperature of the battery cell 20 reaches a predetermined value.

By way of example, in FIG. 3 and FIG. 4, the pressure relief mechanism 6 is disposed on the wall portion 11 of the housing 1, and correspondingly, in the thickness direction X of the wall portion, the protective patch 4 is provided with a third clearance hole 43 at a position corresponding to the pressure relief mechanism 6. The third clearance hole 43 penetrates through both sides of the protective patch 4, and in the thickness direction X of the wall portion, the projection of the pressure relief mechanism 6 is located within the third clearance hole 43, enabling the third clearance hole 43 to provide clearance for the pressure relief mechanism 6, thereby reducing obstruction from the protective patch 4 when the pressure relief mechanism 6 releases the internal pressure of the battery cell 20.

By way of example, the pressure relief mechanism 6 may be a pressure relief component such as an explosion-proof valve, explosion-proof disc, pressure relief valve, or safety valve.

The one-way valve assembly 3 is disposed on the wall portion 11 of the housing 1, enabling the one-way valve assembly 3 to open unidirectionally to discharge gas from inside the housing 1 to the outside of the housing 1 through the discharge port 31. This allows gas generated inside the housing 1 during normal operation of the battery cell 20 to be released through the one-way valve assembly 3 to the outside of the housing 1, so as to alleviate the issue that the internal pressure of the battery cell 20 reaches a threshold prematurely due to rising internal gas pressure of the battery cell 20, causing premature actuation of the battery cell 20 to release pressure, thereby effectively enhancing the operational stability of the battery cell 20 and improving the service life and operational reliability of the battery cell 20. In addition, a protective patch 4 is disposed on the side of the wall portion 11 facing away from the electrode assembly 2, thus serving to protect the wall portion 11. An information collection hole 41 is formed in the protective patch 4, with the projection of the information collection hole 41 in the thickness direction X of the wall portion located within the one-way valve assembly 3 and the protective patch 4 covering the discharge port 31 of the one-way valve assembly 3, such that the information collection hole 41 is disposed in correspondence with the one-way valve assembly 3 and covers the discharge port 31. This allows the discharge port 31 to be concealed by the protective patch 4, which is advantageous for enhancing the aesthetic appearance of the outer surface of the battery cell 20; and in addition, the risk that impurities, particles, or the like from the external environment enter the discharge port 31 and cause blockages in the one-way valve assembly 3 can be reduced by covering the discharge port 31 with the protective patch 4, which is advantageous for improving the operational reliability of the battery cell 20. Furthermore, the one-way valve assembly 3 is disposed in correspondence with the information collection hole 41 of the protective patch 4, such that the region of the battery cell 20 for gas discharge through the one-way valve assembly 3 can be disposed in correspondence with the region of the protective patch 4 where the information collection hole 41 is disposed, thereby saving space on the outer surface of the housing 1 occupied by the information collection hole 41 and the one-way valve assembly 3, which is advantageous for improving the integration of the battery cell 20.

According to some embodiments of the present application, referring to FIG. 3 and FIG. 5, the one-way valve assembly 3 forms an exposed surface 32 at a position corresponding to the information collection hole 41, the exposed surface 32 being a flat surface.

The one-way valve assembly 3 forms an exposed surface 32 at the position corresponding to the information collection hole 41, that is, the surface of the region of the one-way valve assembly 3 exposed by the information collection hole 41 of the protective patch 4 is the exposed surface 32.

It should be noted that the exposed surface 32 is a flat surface, meaning the exposed surface 32 is a continuous and complete flat surface without structures such as holes or grooves.

The exposed surface 32 formed by the one-way valve assembly 3 at the position corresponding to the information collection hole 41 is configured as a flat surface, so as to facilitate providing an information code or connecting a component such as a detection element for sampling on the exposed surface 32 of the flat structure and to further enhance the aesthetic appearance of the outer surface of the battery cell 20.

In some embodiments, continuing to refer to FIG. 3 and FIG. 5, in the thickness direction X of the wall portion, the wall portion 11 has a first surface 112 facing away from the electrode assembly 2, the first surface 112 being flush with the exposed surface 32.

The first surface 112 is flush with the exposed surface 32, that is, the surface of the region of the one-way valve assembly 3 exposed by the information collection hole 41 of the protective patch 4 is flush with the outer surface of the wall portion 11.

The exposed surface 32 formed by the one-way valve assembly 3 corresponding to the information collection hole 41 is configured to be flush with the first surface 112 of the wall portion 11 facing away from the electrode assembly 2, which is advantageous for further enhancing the aesthetic appearance of the outer surface of the battery cell 20, and in addition, facilitates providing the protective patch 4 on the side of the wall portion 11 facing away from the electrode assembly 2, thereby reducing the difficulty of assembling the protective patch 4 onto the wall portion 11 and minimizing interference of the one-way valve assembly 3 with the protective patch 4.

According to some embodiments of the present application, referring to FIG. 3, FIG. 4, and FIG. 5, and further referring to FIG. 6, where FIG. 6 is an assembly schematic diagram of a protective patch 4 and a covering member 34 of a battery cell 20 according to some embodiments of the present application, the one-way valve assembly 3 forms an exposed surface 32 at a position corresponding to the information collection hole 41, and the one-way valve assembly 3 includes a one-way valve 33 and a covering member 34. The one-way valve 33 is mounted on the wall portion 11, where the one-way valve 33 has a vent hole 331, the vent hole 331 being configured to discharge gas from inside the housing 1. The covering member 34 is connected to the wall portion 11, where in the thickness direction X of the wall portion, the covering member 34 is located at an end of the one-way valve 33 facing away from the electrode assembly 2, the covering member 34 covers the one-way valve 33, and the covering member 34 has a second surface 341 facing away from the one-way valve 33, the second surface 341 including the exposed surface 32. An exhaust passage 35 is formed between the covering member 34 and the wall portion 11, where the exhaust passage 35 is in communication with the vent hole 331, and the discharge port 31 in communication with the outside of the housing 1 is formed at an end of the exhaust passage 35.

The one-way valve 33 is mounted on the wall portion 11, where the one-way valve 33 has a vent hole 331, the vent hole 331 being configured to discharge gas from inside the housing 1, meaning the one-way valve 33 can open unidirectionally for exhaust to allow gas to be discharged through the vent hole 331, enabling gas inside the housing 1 to be discharged through the one-way valve 33 into the exhaust passage 35 and then released to the outside of the housing 1 through the discharge port 31 of the exhaust passage 35. Optionally, the structure for disposing the one-way valve 33 on the wall portion 11 may be various, such as welding the one-way valve 33 to the wall portion 11, snap-fitting the one-way valve 33 to the wall portion 11, or bonding the one-way valve 33 to the wall portion 11.

By way of example, in FIG. 5, a portion of the one-way valve 33 is assembled into the mounting hole 111 and extends into the inside of the housing 1 in the thickness direction X of the wall portion, with a sealed connection formed between the one-way valve 33 and the wall surface of the mounting hole 111.

The covering member 34 is mounted on the wall portion 11, where in the thickness direction X of the wall portion, the covering member 34 is located at an end of the one-way valve 33 facing away from the electrode assembly 2, meaning the covering member 34 and the one-way valve 33 are disposed in the thickness direction X of the wall portion, and the covering member 34 is farther from the electrode assembly 2 than the one-way valve 33. Optionally, the structure for mounting the covering member 34 on the wall portion 11 may be various. For example, the covering member 34 may be mounted on the wall portion 11 by means such as welding, interference fitting, bolting, snap-fitting, or adhesive bonding.

The covering member 34 covers the one-way valve 33, meaning the projection of the one-way valve 33 in the thickness direction X of the wall portion is located within the covering member 34.

The covering member 34 has a second surface 341 facing away from the one-way valve 33, the second surface 341 including the exposed surface 32. This means that, in the thickness direction X of the wall portion, the covering member 34 is disposed in correspondence with the information collection hole 41 of the protective patch 4, such that the projection of the information collection hole 41 is located within the second surface 341 of the covering member 34, and the region of the second surface 341 exposed by the information collection hole 41 is the exposed surface 32.

An exhaust passage 35 is formed between the covering member 34 and the wall portion 11, and the exhaust passage 35 is in communication with the vent hole 331, that is, the covering member 34 and the wall portion 11 jointly define the exhaust passage 35 connecting the vent hole 331 of the one-way valve 33 to the outside of the housing 1, enabling gas released from the inside of the housing 1 through the vent hole 331 of the one-way valve 33 to enter the exhaust passage 35 and then be released to the outside of the housing 1.

The discharge port 31 in communication with the outside of the housing 1 is formed at an end of the exhaust passage 35, meaning an end of the exhaust passage 35 is in communication with the vent hole 331 of the one-way valve 33, while another end forms the discharge port 31 in communication with the outside of the housing 1.

By way of example, the material of the covering member 34 may be copper, iron, aluminum, steel, aluminum alloy, or the like.

The one-way valve assembly 3 is provided with a one-way valve 33 and a covering member 34, and the one-way valve 33 is configured to discharge gas from inside the housing 1 through the vent hole 331. The covering member 34 is disposed at the end of the one-way valve 33 facing away from the electrode assembly 2 and covers the one-way valve 33, forming the exposed surface 32 on the second surface 341 of the covering member 34 facing away from the one-way valve 33 and enabling the projection of the information collection hole 41 of the protective patch 4 in the thickness direction X of the wall portion to be located within the second surface 341. The one-way valve assembly 3 adopting such a structure facilitates disposing the information collection hole 41 in correspondence with the covering member 34 to form the exposed surface 32 on the covering member 34, thereby enabling an information code or connect a component such as a detection element for sampling to be provided on the covering member 34, which is advantageous for reducing damage or pulling on the one-way valve 33 caused by the information code or detection element. In addition, after the one-way valve 33 is covered by the covering member 34, an exposed surface 32 can be conveniently formed on the covering member 34, which is advantageous for reducing the difficulty of forming the exposed surface 32.

According to some embodiments of the present application, referring to FIG. 4, FIG. 5, and FIG. 6, in the thickness direction X of the wall portion, the wall portion 11 has a first surface 112 facing away from the electrode assembly 2, the first surface 112 is provided with a mounting groove 113, a bottom surface of the mounting groove 113 is provided with a mounting hole 111, at least a portion of the one-way valve 33 is mounted within the mounting hole 111, and at least a portion of the covering member 34 is accommodated within the mounting groove 113.

The first surface 112 is provided with a mounting groove 113, and the bottom surface of the mounting groove 113 is provided with a mounting hole 111, meaning the mounting hole 111 extends through the bottom surface of the mounting groove 113, enabling the mounting hole 111 to connect to the outside of the housing 1 through the mounting groove 113.

At least a portion of the covering member 34 is accommodated within the mounting groove 113, meaning the covering member 34 may be entirely located within the mounting groove 113 or only partially located within the mounting groove 113. By way of example, in FIG. 5 and FIG. 6, the covering member 34 is entirely located within the mounting groove 113.

The mounting groove 113 is disposed on the first surface 112 of the wall portion 11 facing away from the electrode assembly 2, and at least a portion of the covering member 34 is accommodated within the mounting groove 113. This reduces the space occupied by the covering member 34 and the wall portion 11 in the thickness direction X of the wall portion, which is advantageous for optimizing the volume of the battery cell 20, and in addition, the mounting groove 113 can provide a certain degree of positioning and limiting for the covering member 34, which is advantageous for reducing the assembly difficulty of connecting the covering member 34 to the wall portion 11.

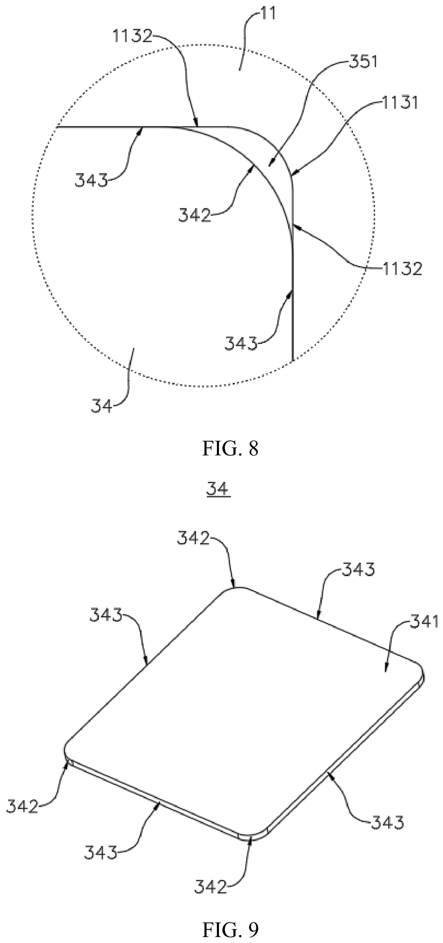

According to some embodiments of the present application, referring to FIG. 5 and FIG. 6, and further referring to FIG. 7 and FIG. 8, where FIG. 7 is a top view of a battery cell 20 (with the protective patch 4 removed) according to some embodiments of the present application, and FIG. 8 is a partial enlarged view of portion A of the battery cell 20 shown in FIG. 7, the exhaust passage 35 may include a first exhaust gap 351, and the first exhaust gap 351 is formed between the covering member 34 and a side surface of the mounting groove 113, with the discharge port 31 formed at an end of the first exhaust gap 351 away from the electrode assembly 2 in the thickness direction X of the wall portion.

The first exhaust gap 351 serves to connect the vent hole 331 of the one-way valve 33 to the outside of the housing 1. The first exhaust gap 351 may be in direct communication with the vent hole 331 of the one-way valve 33, for example, at least a portion of the projection of the first exhaust gap 351 in the thickness direction X of the wall portion is located within the mounting hole 111, enabling the vent hole 331 of the one-way valve 33 disposed within the mounting hole 111 to be in direct communication with the first exhaust gap 351. Alternatively, the first exhaust gap 351 may be in indirect communication with the vent hole 331 of the one-way valve 33. For example, in FIG. 5 and FIG. 6, the exhaust passage 35 may further include a second exhaust gap 352, the second exhaust gap 352 being formed between the covering member 34 and the bottom surface of the mounting groove 113, the second exhaust gap 352 connecting the first exhaust gap 351 and the vent hole 331 of the one-way valve 33.

The discharge port 31 is formed at an end of the first exhaust gap 351 away from the electrode assembly 2 in the thickness direction X of the wall portion, meaning the first exhaust gap 351 is formed between the covering member 34 and the side surface of the mounting groove 113 and extends in the thickness direction X of the wall portion, forming the discharge port 31 at the end where the first exhaust gap 351 extends through the second surface 341 of the covering member 34.

It should be noted that the structure of the first exhaust gap 351 formed between the covering member 34 and the side surface of the mounting groove 113 may be various. By way of example, referring to FIG. 7 and FIG. 8, and further referring to FIG. 9, where FIG. 9 is a schematic structural diagram of a covering member 34 of a one-way valve assembly 3 of a battery cell 20 according to some embodiments of the present application, the outer peripheral surface of the covering member 34 includes a first corner surface 342 and at least two first side surfaces 343, the first corner surface 342 connecting two adjacent first side surfaces 343, and the side surface of the mounting groove 113 includes a second corner surface 1131 and at least two second side surfaces 1132, where the second corner surface 1131 connects two adjacent second side surfaces 1132, each second side surface 1132 is connected to one first side surface 343, and the first exhaust gap 351 is formed between the second corner surface 1131 and the first corner surface 342.

The first corner surface 342 connects two adjacent first side surfaces 343, meaning in the circumferential direction of the covering member 34, the first corner surface 342 is located between two first side surfaces 343 and connects the two first side surfaces 343, that is, the first corner surface 342 is the surface at the corner of the outer peripheral surface of the covering member 34.

The second corner surface 1131 connects two adjacent second side surfaces 1132, meaning in the circumferential direction of the mounting groove 113, the second corner surface 1131 is located between two second side surfaces 1132 and connects the two second side surfaces 1132, that is, the second corner surface 1131 is the surface at the corner of the side surface of the mounting groove 113.

Each first side surface 343 of the covering member 34 abuts against and is connected to a corresponding second side surface 1132 of the side surface of the mounting groove 113, such that the first corner surface 342 of the covering member 34 faces the second corner surface 1131 of the side surface of the mounting groove 113, forming the first exhaust gap 351 between the first corner surface 342 and the second corner surface 1131.

Optionally, the connection structure between the first side surface 343 and the second side surface 1132 may be various, such as welding, adhesive bonding, or interference fitting. By way of example, in the embodiments of the present application, the first side surface 343 is welded to the second side surface 1132. The first side surface 343 and the second side surface 1132 are configured to be welded to each other, which is advantageous for enhancing the connection firmness between the covering member 34 and the side surface of the mounting groove 113, improving the structural stability of the covering member 34 assembled on the wall portion 11.

Of course, the structure of the first exhaust gap 351 formed between the covering member 34 and the side surface of the mounting groove 113 is not limited to this. For example, in other embodiments, the outer peripheral surface of the covering member 34 may be provided with a first recess, and the outer peripheral surface of the covering member 34 is configured to connect to the side surface of the mounting groove 113, forming the first exhaust gap 351 between the bottom surface of the first recess and the side surface of the mounting groove 113. In this embodiment, the outer peripheral surface of the covering member 34 may be welded or bonded to the side surface of the mounting groove 113. Similarly, in other embodiments, the outer peripheral surface of the covering member 34 may be protrudingly provided with a plurality of first protrusions, where the plurality of first protrusions are circumferentially spaced along the covering member 34, and the first protrusions are configured to connect to the side surface of the mounting groove 113, forming the first exhaust gap 351 between the region of the covering member 34 without the first protrusions and the side surface of the mounting groove 113. In such an embodiment, the first protrusions may be in interference fit, welded, or bonded to the side surface of the mounting groove 113.

Two adjacent first side surfaces 343 on the outer peripheral surface of the covering member 34 are connected by the first corner surface 342, and two adjacent second side surfaces 1132 on the side surface of the mounting groove 113 are connected by the second corner surface 1131, where each first side surface 343 is connected to one second side surface 1132, and the first gap is formed between the first corner surface 342 and the second corner surface 1131, that is, the first exhaust gap 351 is formed at the corner between the covering member 34 and the mounting groove 113. This facilitates the formation of the first exhaust gap 351 between the outer peripheral surface of the covering member 34 and the side surface of the mounting groove 113, with a simple structure that is easy to implement, and in addition, this helps increases the connection area between the outer peripheral surface of the covering member 34 and the side surface of the mounting groove 113 while the first exhaust gap 351 between the outer peripheral surface of the covering member 34 and the side surface of the mounting groove 113 is formed, which is advantageous for enhancing the firmness of connecting the covering member 34 to the wall portion 11.

In some embodiments, referring to FIG. 7, FIG. 8, and FIG. 9, the first corner surface 342 and the second corner surface 1131 are both arcuate surfaces, and the radius of the first corner surface 342 is greater than the radius of the second corner surface 1131.

The first corner surface 342 and the second corner surface 1131 are both arcuate surfaces, meaning the first corner surface 342 is the surface formed at the rounded corner of the outer peripheral surface of the covering member 34, and similarly, the second corner surface 1131 is the surface formed at the rounded corner of the side surface of the mounting groove 113. Of course, in other embodiments, the first corner surface 342 may be a surface formed at a chamfered corner of the outer peripheral surface of the covering member 34, and the second corner surface 1131 may be a surface formed at a chamfered corner of the side surface of the mounting groove 113.

The radius of the first corner surface 342 is greater than the radius of the second corner surface 1131, meaning the diameter of the rounded corner of the outer peripheral surface of the covering member 34 is greater than the diameter of the rounded corner of the side surface of the mounting groove 113.

Both the first corner surface 342 and the second corner surface 1131 are configured as arcuate surfaces, and the radius of the first corner surface 342 is greater than that of the second corner surface 1131, forming the first exhaust gap 351 between the first corner surface 342 and the second corner surface 1131, resulting in a simple structure that is easy to manufacture and process.

In some embodiments, continuing to refer to FIG. 7, FIG. 8, and FIG. 9, a cross-section of the covering member 34 perpendicular to the thickness direction X of the wall portion is rectangular, the outer peripheral surface of the covering member 34 includes four first side surfaces 343 and four first corner surfaces 342, and the first exhaust gap 351 is formed at at least one of the first corner surfaces 342.

The cross-section of the covering member 34 in the thickness direction X perpendicular to the wall portion is a rectangular structure, meaning the covering member 34 is a rectangular structure. Correspondingly, the shape of the mounting groove 113 matches the covering member 34, and the mounting groove 113 is also a rectangular structure.

The first exhaust gap 351 is formed in at least one first corner surface 342, meaning the first exhaust gap 351 may be formed in one, two, three, or four of the four first corner surfaces 342 of the covering member 34 at their respective positions.

It should be noted that, in other embodiments, the cross-section of the covering member 34 perpendicular to the thickness direction X of the wall portion may alternatively be triangular, pentagonal, hexagonal, or trapezoidal.

The covering member 34 is configured as a rectangular plate-like structure, so that the four edges of the covering member 34 form four first side surfaces 343 and form four first corner surfaces 342 at the four right angles of the covering member 34, resulting in a simple structure that is easy to manufacture.

The first exhaust gap 351 in communication with the outside of the housing 1 is formed between the covering member 34 and the side surface of the mounting groove 113, with the discharge port 31 formed at an end of the first exhaust gap 351 away from the electrode assembly 2 in the thickness direction X of the wall portion, enabling gas discharged from the one-way valve 33 to be released to the outside of the housing 1 through the first exhaust gap 351. This battery cell 20 adopting such a structure eliminates the need to form apertures in the covering member 34, which is advantageous for reducing processing difficulty, enhancing the aesthetic appearance of the battery cell 20, and facilitating coverage of the discharge port 31 by the protective patch 4.

According to some embodiments of the present application, referring to FIG. 5 and FIG. 6, the exhaust passage 35 may further include a second exhaust gap 352, the second exhaust gap 352 being formed between the covering member 34 and the bottom surface of the mounting groove 113 and connecting the first exhaust gap 351 to the vent hole 331.

The second exhaust gap 352 is formed between the covering member 34 and the bottom surface of the mounting groove 113, which may be achieved by spacing the covering member 34 and the bottom surface of the mounting groove 113 in the thickness direction X of the wall portion, forming the second exhaust gap 352 between the surface of the covering member 34 facing the bottom surface of the mounting groove 113 and the bottom surface of the mounting groove 113, or by providing a first groove 3441 on the surface of the covering member 34 facing the bottom surface of the mounting groove 113 to form the second exhaust gap 352 between the bottom surface of the first groove 3441 and the bottom surface of the mounting groove 113.

It should be noted that, in other embodiments, alternatively, the first groove 3441 may be provided on the bottom surface of the mounting groove 113 to form the second exhaust gap 352 between the bottom surface of the first groove 3441 and the surface of the covering member 34 facing the bottom surface of the mounting groove 113.

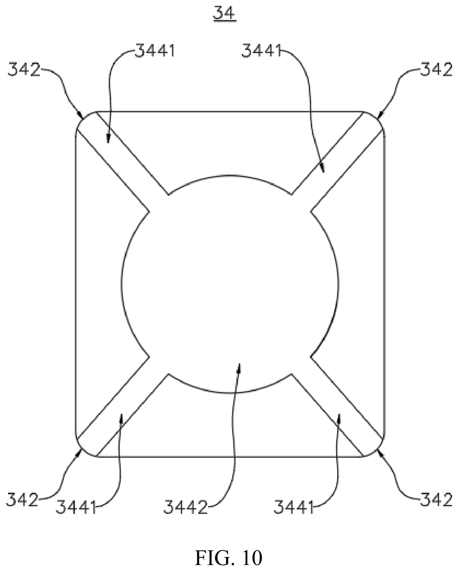

By way of example, referring to FIG. 5 and FIG. 6, and further referring to FIG. 10, where FIG. 10 is a bottom view of a covering member 34 of a one-way valve assembly 3 of a battery cell 20 according to some embodiments of the present application, in the thickness direction X of the wall portion, the covering member 34 has a fourth surface 344 facing the one-way valve 33, where the fourth surface 344 overlaps the bottom surface of the mounting groove 113 and is provided with a first groove 3441, and the second exhaust gap 352 is formed between a bottom surface of the fourth surface 344 and the bottom surface of the mounting groove 113.

The fourth surface 344 overlaps the bottom surface of the mounting groove 113, meaning a portion of the fourth surface 344 abuts against the bottom surface of the mounting groove 113. Specifically, in the thickness direction X of the wall portion, the covering member 34 abuts against the bottom surface of the mounting groove 113.

The second exhaust gap 352 is formed between the bottom surface of the first groove 3441 and the bottom surface of the mounting groove 113, meaning the bottom surface of the first groove 3441, the side surface of the first groove 3441, and the bottom surface of the mounting groove 113 jointly define the second exhaust gap 352.

The fourth surface 344 of the covering member 34 overlaps the bottom surface of the mounting groove 113, making the covering member 34 abut against the bottom surface of the mounting groove 113 to enhance the structural stability and reliability of the covering member 34 mounted in the mounting groove 113. In addition, the first groove 3441 is disposed on the fourth surface 344 to form the second exhaust gap 352 between the bottom surface of the first groove 3441 and the bottom surface of the mounting groove 113, enabling gas discharged from the vent hole 331 of the one-way valve 33 to enter the first exhaust gap 351 through the first groove 3441 and then be discharged to the outside of the housing 1. This enables the connection between the first exhaust gap 351 and the vent hole 331 through the first groove 3441 while allowing the covering member 34 to abut against the bottom surface of the mounting groove 113.

In some embodiments, referring to FIG. 5, FIG. 7, FIG. 8, and FIG. 10, a plurality of first exhaust gaps 351 are formed between the covering member 34 and the side surface of the mounting groove 113, the plurality of first exhaust gaps 351 being circumferentially spaced along the covering member 34, where the fourth surface 344 is provided with a plurality of first grooves 3441, and each first exhaust gap 351 is connected to one first groove 3441.

The first groove 3441 extends in the radial direction of the covering member 34 and extends through the first corner surface 342, enabling the second exhaust gap 352 formed between the bottom surface of the first groove 3441 and the bottom surface of the mounting groove 113 to connect to the first exhaust gap 351 formed between the first corner surface 342 and the second corner surface 1131. Of course, in embodiments where the first exhaust gap 351 is formed between the bottom surface of a first recess of the covering member 34 and the side surface of the mounting groove 113, the first groove 3441 extends through the bottom surface of the first recess. Similarly, in embodiments where the first exhaust gap 351 is formed between the region of the outer peripheral surface of the covering member 34 without the first protrusions and the side surface of the mounting groove 113, the first groove 3441 extends through the region of the outer peripheral surface of the covering member 34 without the first protrusions.

By way of example, in FIG. 10, the covering member 34 is a rectangular structure. The covering member 34 has four first corner surfaces 342, with a first exhaust gap 351 formed at each first corner surface 342, and correspondingly, the second surface 341 of the covering member 34 is provided with four first grooves 3441, each first groove 3441 penetrating through one first corner surface 342.

A plurality of first exhaust gaps 351 are formed between the covering member 34 and the side surface of the mounting groove 113, each first exhaust gap 351 being connected to one first groove 3441, which is advantageous for further improving the exhaust efficiency.

In some embodiments, referring to FIG. 5, FIG. 6, and FIG. 10, the fourth surface 344 may be further provided with a second groove 3442, where the plurality of first grooves 3441 are disposed around the second groove 3442 and are all in communication with the second groove 3442, and the second groove 3442 is in communication with the vent hole 331 of the one-way valve 33.

In the thickness direction X of the wall portion, the vent hole 331 is disposed at an end of the one-way valve 33 facing away from the electrode assembly 2, the vent hole 331 faces the second groove 3442, and the projection of the vent hole 331 is located within the second groove 3442.

By way of example, the projection of the one-way valve 33 in the thickness direction X of the wall portion is entirely located within the second groove 3442.

By way of example, the fourth surface 344 of the covering member 34 is provided with four first grooves 3441, where the four first grooves 3441 are circumferentially spaced along the second groove 3442, each first groove 3441 extends in the radial direction of the covering member 34 and penetrates through the side surface of the second groove 3442, enabling the first groove 3441 to connect to the vent hole 331 of the one-way valve 33 through the second groove 3442, thereby enabling the second exhaust gap 352 to connect to the vent hole 331 of the one-way valve 33 through the second groove 3442.

The second groove 3442 is provided on the fourth surface 344 of the covering member 34 facing the one-way valve 33, where the second groove 3442 is in communication with the vent hole 331 of the one-way valve 33, and the plurality of first grooves 3441 are disposed around the second groove 3442 and all in communication with the second groove 3442, such that gas discharged from the vent hole 331 of the one-way valve 33 can enter the second groove 3442 and then pass through the respective first grooves 3441 to the corresponding first exhaust gaps 351 to be discharged to the outside of the housing 1. This improves exhaust efficiency and mitigates the accumulation of gas between the covering member 34 and the one-way valve 33.

The exhaust passage 35 further includes a second exhaust gap 352 formed between the covering member 34 and the bottom surface of the mounting groove 113, where the second exhaust gap 352 connects the first exhaust gap 351 to the vent hole 331, so as to alleviate exhaust obstruction that may occur when the covering member 34 abuts against the bottom surface of the mounting groove 113 and blocks the communication between the vent hole 331 and the first exhaust gap 351, thereby improving the smoothness of gas discharge from the vent hole 331 of the one-way valve 33 to the first exhaust gap 351.

According to some embodiments of the present application, referring to FIG. 5 and FIG. 6, in the thickness direction X of the wall portion, the covering member 34 does not protrude beyond the first surface 112.

The covering member 34 does not protrude beyond the first surface 112, meaning the covering member 34 does not extend out of the mounting groove 113 in the thickness direction X of the wall portion, such that the covering member 34 is entirely located within the mounting groove 113.

The covering member 34 is configured to not protrude beyond the first surface 112 of the wall portion 11 facing away from the electrode assembly 2 in the thickness direction X of the wall portion, such that the mounting groove 113 can provide a certain degree of protection to the covering member 34, further reducing wear on the covering member 34.

In some embodiments, continuing to refer to FIG. 5 and FIG. 6, the first surface 112 is flush with the second surface 341.

In the thickness direction X of the wall portion, the one-way valve 33 does not protrude beyond the bottom surface of the mounting groove 113, that is, the one-way valve 33 is disposed within the mounting hole 111 and does not extend into the mounting groove 113 in the thickness direction X of the wall portion.

By way of example, in FIG. 5 and FIG. 6, the end face of the one-way valve 33 facing away from the electrode assembly 2 in the thickness direction X of the wall portion is flush with the bottom surface of the mounting groove 113, and the projection of the one-way valve 33 in the thickness direction X of the wall portion is located within the second groove 3442, such that the one-way valve 33 and the bottom surface of the second groove 3442 are spaced apart in the thickness direction X of the wall portion. A portion of the one-way valve 33 facing the electrode assembly 2 in the thickness direction X of the wall portion protrudes beyond the surface of the wall portion 11 facing the electrode assembly 2, such that a portion of the one-way valve 33 extends into the inside of the housing 1.

The second surface 341 of the covering member 34 facing away from the one-way valve 33 is configured to be flush with the first surface 112 of the wall portion 11 facing away from the electrode assembly 2, which is advantageous for further enhancing the aesthetic appearance of the outer surface of the battery cell 20 and facilitates the formation of the exposed surface 32 on the second surface 341 of the covering member 34, and in addition, facilitates providing the protective patch 4 on the side of the wall portion 11 facing away from the electrode assembly 2, reducing the difficulty of assembling the protective patch 4 onto the wall portion 11.

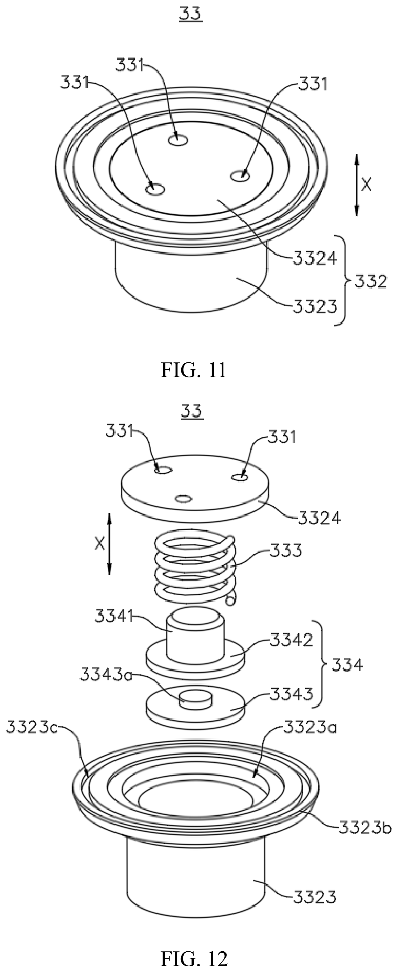

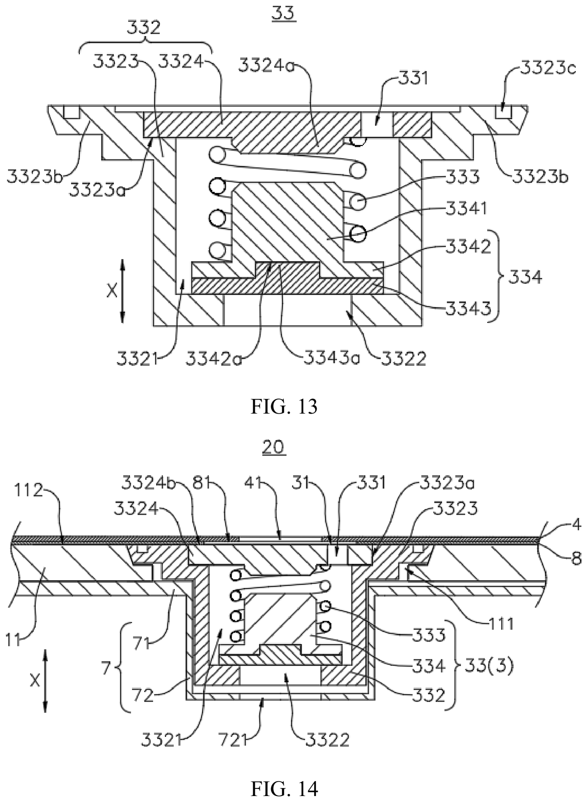

According to some embodiments of the present application, referring to FIG. 5, and further referring to FIG. 11, FIG. 12, and FIG. 13, where FIG. 11 is a schematic structural diagram of a one-way valve 33 of a one-way valve assembly 3 of a battery cell 20 according to some embodiments of the present application, FIG. 12 is an exploded structural diagram of a one-way valve 33 of a one-way valve assembly 3 of a battery cell 20 according to some embodiments of the present application, and FIG. 13 is a cross-sectional view of a one-way valve 33 of a one-way valve assembly 3 of a battery cell 20 according to some embodiments of the present application, the one-way valve 33 includes a valve body 332, an elastic member 333, and a sealing member 334. The valve body 332 is mounted on the wall portion 11, where a mounting cavity 3321 is formed inside the valve body 332, and the valve body 332 is provided with an inlet hole 3322 and a vent hole 331, with the inlet hole 3322 connecting the mounting cavity 3321 to the inside of the housing 1 and the vent hole 331 connecting the mounting cavity 3321 to the exhaust passage 35. The elastic member 333 is disposed within the mounting cavity 3321. The sealing member 334 is movably disposed within the mounting cavity 3321 and is configured to seal the inlet hole 3322 under the action of the elastic member 333 and to open the inlet hole 3322 under the action of gas inside the housing 1.

The inlet hole 3322 is configured to connect the mounting cavity 3321 and the inside of the housing 1, meaning gas inside the housing 1 can enter the mounting cavity 3321 through the inlet hole 3322. Similarly, the vent hole 331 is configured to connect the mounting cavity 3321 and the exhaust passage 35, meaning gas that has entered the mounting cavity 3321 from inside the housing 1 can enter the exhaust passage 35 through the vent hole 331 and then be discharged to the outside of the housing 1 through the discharge port 31 of the exhaust passage 35.

The sealing member 334 is movably disposed within the mounting cavity 3321, meaning the sealing member 334 can move within the mounting cavity 3321, enabling the sealing member 334 to seal the inlet hole 3322 when moving toward the inlet hole 3322 and to open the inlet hole 3322 when moving away from the inlet hole 3322.

The sealing member 334 is configured to seal the inlet hole 3322 under the action of the elastic member 333 and to open the inlet hole 3322 under the action of gas inside the housing 1, that is, the elastic member 333 can provide an elastic force to the sealing member 334, enabling the sealing member 334 to abut against the bottom surface of the mounting cavity 3321 to seal the inlet hole 3322. Conversely, when the force exerted by the gas inside the housing 1 on the sealing member 334 is greater than the elastic force of the elastic member 333, the gas inside the housing 1 can overcome the elastic force of the elastic member 333 and push the sealing member 334 to separate from the bottom surface of the mounting cavity 3321, enabling the sealing member 334 to open the inlet hole 3322, thereby enabling gas inside the housing 1 to enter the mounting cavity 3321 through the inlet hole 3322 and then be discharged through the vent hole 331.

Optionally, the elastic member 333 is a component with elasticity, and its structure may be various, such as a spring, elastic sheet, or elastic rubber. By way of example, in FIG. 12 and FIG. 13, the elastic member 333 is a spring. Of course, in other embodiments, the elastic member 333 and the sealing member 334 may alternatively be an integral elastic component, such as elastic rubber.

It should be noted that the projection of the vent hole 331 in the thickness direction X of the wall portion may be located inside or outside the spring. When there are a plurality of vent holes 331, projections of the plurality of vent holes 331 in the thickness direction X of the wall portion may all be located inside the spring or outside the spring. Of course, in some embodiments, the projections may be partially inside and partially outside the spring.

The one-way valve 33 includes a valve body 332, an elastic member 333, and a sealing member 334, where the valve body 332 is disposed on the wall portion 11, and the valve body 332 is provided with an inlet hole 3322 connecting the mounting cavity 3321 to the inside of the housing 1 and a vent hole 331 connecting the mounting cavity 3321 to the exhaust passage 35. Both the elastic member 333 and the sealing member 334 are disposed within the mounting cavity 3321, enabling the elastic member 333 to apply an elastic force to the sealing member 334 to seal the inlet hole 3322, preventing gas outside the housing 1 from entering the inside of the housing 1. When the internal pressure of the housing 1 rises, gas inside the housing 1 can act on the sealing member 334 and overcome the elastic force of the elastic member 333, enabling the sealing member 334 to open the inlet hole 3322, thereby enabling gas inside the housing 1 to be discharged through the one-way valve 33, achieving the unidirectional exhaust function of the one-way valve 33.

According to some embodiments of the present application, referring to FIG. 5, FIG. 6, FIG. 11, FIG. 12, and FIG. 13, the valve body 332 may include a valve main body 3323 and a valve cover 3324. The valve main body 3323 is mounted on the wall portion 11, where the valve main body 3323 is provided with the inlet hole 3322 at an end close to the electrode assembly 2 in the thickness direction X of the wall portion. In the thickness direction X of the wall portion, the valve cover 3324 is connected to an end of the valve main body 3323 facing away from the electrode assembly 2, the valve cover 3324 and the valve main body 3323 together enclose the mounting cavity 3321, the valve cover 3324 and the sealing member 334 are spaced apart, two ends of the elastic member 333 respectively abut against the valve cover 3324 and the sealing member 334, and the valve cover 3324 is provided with the vent hole 331.

The wall portion 11 is provided with a mounting hole 111, the valve main body 3323 being disposed within the mounting hole 111 and extending into the inside of the housing 1 in the thickness direction X of the wall portion, meaning the valve main body 3323 protrudes in the thickness direction X of the wall portion beyond the surface of the wall portion 11 facing the electrode assembly 2.

The structure for mounting the valve main body 3323 on the wall portion 11 may be various, for example, the valve main body 3323 may be welded to the wall surface of the mounting hole 111 or bonded to the wall surface of the mounting hole 111 with sealant.

By way of example, the inlet hole 3322 is disposed at an end of the valve main body 3323 close to the electrode assembly 2 in the thickness direction X of the wall portion, meaning the inlet hole 3322 extends through the bottom surface of the mounting cavity 3321. Correspondingly, the sealing member 334 is movably disposed within the mounting cavity 3321 in the thickness direction X of the wall portion, enabling the sealing member 334 to seal the inlet hole 3322 when abutting against the bottom surface of the mounting cavity 3321. Of course, in other embodiments, the inlet hole 3322 may be disposed on a side of the valve main body 3323 in the radial direction of the valve main body 3323, with the sealing member 334 movably disposed within the mounting cavity 3321 in the radial direction of the valve main body 3323.

By way of example, the vent hole 331 is disposed on the valve cover 3324, and the vent hole 331 penetrates through two sides of the valve cover 3324 in the thickness direction X of the wall portion. In FIG. 12, the valve cover 3324 is provided with three vent holes 331, the three vent holes 331 being disposed around the central axis of the mounting hole 111. Of course, in other embodiments, the number of vent holes 331 provided on the valve cover 3324 may be one, two, four, or five.

In an example, when a plurality of vent holes 331 are provided in the valve cover 3324, the plurality of vent holes 331 are equally spaced.

In an example, the plurality of vent holes 331 are equally spaced around the center of the valve cover 3324, facilitating smoother gas flow.

In some embodiments, referring to FIG. 12 and FIG. 13, the valve cover 3324 is connected to the valve main body 3323, the valve main body 3323 being provided with a recessed groove 3323a at an end facing away from the electrode assembly 2. At least a portion of the valve cover 3324 is accommodated within the recessed groove 3323a. The recessed groove 3323a is provided at the end of the valve main body 3323 facing away from the electrode assembly 2, and at least a portion of the valve cover 3324 is accommodated within the recessed groove 3323a. The one-way valve 33 adopting such a structure can save the space occupied by the valve body 332 in the thickness direction X of the wall portion, and in addition, enhance the structural stability of the valve cover 3324 assembled on the valve main body 3323, while also providing a certain degree of protection to the valve cover 3324 to reduce wear or damage to the valve cover 3324.

The mounting cavity 3321 extends through the bottom surface of the recessed groove 3323a, and the valve cover 3324 is assembled within the recessed groove 3323a and abuts against the bottom surface of the recessed groove 3323a, such that the valve cover 3324 and the valve main body 3323 enclose the mounting cavity 3321.

At least a portion of the valve cover 3324 is accommodated within the recessed groove 3323a, meaning the valve cover 3324 may be entirely or partially located within the recessed groove 3323a. This means that, in the thickness direction X of the wall portion, the valve cover 3324 may or may not extend beyond the recessed groove 3323a. By way of example, in FIG. 13, the valve cover 3324 is entirely located within the recessed groove 3323a.

By way of example, the material of the valve main body 3323 may be a metal material, such as copper, iron, aluminum, steel, or aluminum alloy. Similarly, the material of the valve cover 3324 may also be a metal material, such as copper, iron, aluminum, steel, or aluminum alloy. The valve main body 3323 and the valve cover 3324 may be made of the same material or different materials.

The valve body 332 of the one-way valve 33 includes a valve main body 3323 and a valve cover 3324. The valve cover 3324 is connected to the end of the valve main body 3323 facing away from the electrode assembly 2 in the thickness direction X of the wall portion, enabling the valve cover 3324 and the valve main body 3323 to jointly define the mounting cavity 3321 for accommodating the elastic member 333 and the sealing member 334. This one-way valve 33 adopting such a structure divides the valve body 332 into two parts, facilitating the assembly of the elastic member 333 and the sealing member 334 into the mounting cavity 3321, which is advantageous for reducing the assembly difficulty of the one-way valve 33. In addition, the valve cover 3324 and the sealing member 334 are configured to be spaced apart in the thickness direction X of the wall portion, enabling two ends of the elastic member 333 to respectively abut against the valve cover 3324 and the sealing member 334, such that the sealing member 334 can seal, in the thickness direction X of the wall portion, the inlet hole 3322 disposed at the end of the valve main body 3323 facing the electrode assembly 2 in the thickness direction X of the wall portion under the action of the elastic member 333. The one-way valve 33 adopting such a structure facilitates the elastic member 333 in applying an elastic force to the sealing member 334 to seal the inlet hole 3322 and reduces the assembly difficulty of the elastic member 333.

According to some embodiments of the present application, referring to FIG. 5, FIG. 12, and FIG. 13, in the thickness direction X of the wall portion, the valve cover 3324 and the sealing member 334 are spaced apart, two ends of the elastic member 333 respectively abut against the valve cover 3324 and the sealing member 334, and the inlet hole 3322 is disposed on a bottom surface of the mounting cavity 3321.

The valve cover 3324 faces the bottom surface of the mounting cavity 3321, and the two ends of the elastic member 333 in the thickness direction X of the wall portion respectively abut against the valve cover 3324 and the sealing member 334, such that the elastic member 333 is compressed between the valve cover 3324 and the sealing member 334, enabling the elastic member 333 to provide an elastic force to the sealing member 334, thereby enabling the sealing member 334 to seal the inlet hole 3322 provided on the bottom surface of the mounting cavity 3321 under the action of the elastic force of the elastic member 333.

In some embodiments, referring to FIG. 12 and FIG. 13, a first guide post 3324a is protrudingly provided on a side of the valve cover 3324 facing the sealing member 334, and a portion of the elastic member 333 is sleeved over the outer side of the first guide post 3324a. The first guide post 3324a is provided on the side of the valve cover 3324 facing the sealing member 334, and a portion of the elastic member 333 is sleeved over the outer side of the first guide post 3324a. The one-way valve 33 adopting such a structure can provide a certain degree of positioning for the elastic member 333 through the first guide post 3324a, facilitating the assembly of the elastic member 333 and reducing its assembly difficulty, and in addition, the first guide post 3324a serves a guidance role when the elastic member 333 is compressed in the thickness direction X of the wall portion, reducing radial deformation of the elastic member 333 during compression, thereby enabling stable compression of the elastic member 333 in the thickness direction X of the wall portion, which is advantageous for improving the operational reliability of the elastic member 333 and reducing the risk of the sealing member 334 inadvertently opening the inlet hole 3322.

The elastic member 333 is a spring, a portion of the spring is sleeved over the outer side of the first guide post 3324a, and an end of the spring away from the sealing member 334 abuts against the surface of the valve cover 3324 provided with the first guide post 3324a, meaning the first guide post 3324a is inserted into the spring.

By way of example, the central axis of the first guide post 3324a coincides with the central axis of the mounting hole 111, and the central axis of the elastic member 333 coincides with the central axis of the first guide post 3324a.

It should be noted that, in embodiments where the valve cover 3324 is provided with a plurality of vent holes 331, the plurality of vent holes 331 surround the outer side of the first guide post 3324a. Of course, in other embodiments, the vent hole 331 may extend through the first guide post 3324a in the thickness direction X of the wall portion.

The valve cover 3324 and the sealing member 334 are configured to be spaced apart in the thickness direction X of the wall portion, enabling the two ends of the elastic member 333 to respectively abut against the valve cover 3324 and the sealing member 334, such that the sealing member 334 can seal, in the thickness direction X of the wall portion, the inlet hole 3322 provided on the bottom surface of the mounting cavity 3321 in the thickness direction X of the wall portion under the action of the elastic member 333. That is, the inlet hole 3322 is disposed at the end of the valve main body 3323 facing the electrode assembly 2 in the thickness direction X of the wall portion, and the sealing member 334 can move in the thickness direction X of the wall portion under the action of the elastic member 333 to seal the inlet hole 3322. The one-way valve 33 adopting such a structure facilitates the elastic member 333 in applying an elastic force to the sealing member 334 to seal the inlet hole 3322 and reduces the assembly difficulty of the elastic member 333.

In some embodiments, referring to FIG. 5, FIG. 6, FIG. 11, FIG. 12, and FIG. 13, the wall portion 11 has a first surface 112 facing away from the electrode assembly 2, the first surface 112 is provided with a mounting groove 113, the covering member 34 is assembled within the mounting groove 113, the bottom surface of the mounting groove 113 is provided with a mounting hole 111, the mounting hole 111 is in communication with the inside of the housing 1, and the valve main body 3323 is mounted within the mounting hole 111 and protrudes in the thickness direction X of the wall portion beyond the surface of the wall portion 11 facing the electrode assembly 2. The mounting hole 111 includes a first hole segment 1111 and a second hole segment 1112, where the first hole segment 1111 and the second hole segment 1112 are disposed in the thickness direction X of the wall portion, the first hole segment 1111 is located on a side of the second hole segment 1112 facing away from the electrode assembly 2, and the diameter of the first hole segment 1111 is greater than the diameter of the second hole segment 1112. The valve main body 3323 has a connection portion 3323b located within the first hole segment 1111, where the connection portion 3323b is an annular structure extending circumferentially along the valve main body 3323, and the connection portion 3323b is welded to the wall surface of the first hole segment 1111 to form an annular weld.

Optionally, referring to FIG. 11 and FIG. 13, the connection portion 3323b is further provided with a stress relief groove 3323c, the stress relief groove 3323c being an annular groove structure surrounding the outer side of the valve cover 3324. The stress relief groove 3323c is provided on the connection portion 3323b, enabling the stress relief groove 3323c to release the welding stress generated by welding the connection portion 3323b to the wall surface of the first hole segment 1111, thereby reducing the impact of welding stress on the weld between the wall surface of the first hole segment 1111 and the connection portion 3323b, minimizing the risk of weld cracking, and thus reducing the risk of sealing failure at the weld.

According to some embodiments of the present application, referring to FIG. 5, FIG. 12, and FIG. 13, a second guide post 3341 is protrudingly provided on a side of the sealing member 334 facing the valve cover 3324, and a portion of the elastic member 333 is sleeved over the outer side of the second guide post 3341.

The elastic member 333 is a spring, a portion of the spring is sleeved over the outer side of the second guide post 3341, and an end of the spring away from the valve cover 3324 abuts against the surface of the sealing member 334 provided with the second guide post 3341, meaning the second guide post 3341 is inserted into the spring.

By way of example, the central axis of the second guide post 3341 coincides with the central axis of the mounting hole 111, and the central axis of the elastic member 333 coincides with the central axis of the second guide post 3341.

The second guide post 3341 is provided on the side of the sealing member 334 facing the valve cover 3324, and a portion of the elastic member 333 is sleeved over the outer side of the second guide post 3341. The one-way valve 33 adopting such a structure can provide a certain degree of positioning for the elastic member 333 through the second guide post 3341, facilitating the assembly of the elastic member 333 and reducing its assembly difficulty, and in addition, the second guide post 3341 serves a guidance role when the elastic member 333 is compressed in the thickness direction X of the wall portion, reducing radial deformation of the elastic member 333 during compression, thereby enabling stable compression of the elastic member 333 in the thickness direction X of the wall portion, which is advantageous for improving the operational reliability of the elastic member 333 and reducing the risk of the sealing member 334 inadvertently opening the inlet hole 3322.

According to some embodiments of the present application, referring to FIG. 12 and FIG. 13, the sealing member 334 may include a pressing portion 3342 and a sealing portion 3343. In the thickness direction X of the wall portion, two ends of the elastic member 333 respectively abut against the pressing portion 3342 and the valve cover 3324 or the covering member 34, the sealing portion 3343 is connected to a side of the pressing portion 3342 facing away from the valve cover 3324 or the covering member 34, and the sealing portion 3343 is configured to seal the inlet hole 3322.

The elastic member 333 can provide an elastic force to the pressing portion 3342, enabling the pressing portion 3342 to press against the sealing portion 3343, thereby sealing the inlet hole 3322 through the sealing portion 3343.

Optionally, the rigidity of the pressing portion 3342 is greater than that of the sealing portion 3343, meaning the pressing portion 3342 has a higher resistance to deformation than the sealing portion 3343, enabling the pressing portion 3342 to better press the sealing portion 3343 against the bottom surface of the mounting cavity 3321 to seal the inlet hole 3322. By way of example, the material of the pressing portion 3342 may be various, such as steel, iron, or aluminum. Similarly, the material of the sealing portion 3343 may be various, such as rubber, silicone, or plastic.

Optionally, the connection structure between the pressing portion 3342 and the sealing portion 3343 may be various, such as snap-fitting, bolting, or adhesive bonding.

It should be noted that, in embodiments where the sealing member 334 is provided with a second guide post 3341, the second guide post 3341 is protrudingly provided on a surface of the pressing portion 3342 facing the valve cover 3324 or the covering member 34.

The sealing member 334 is configured to include a pressing portion 3342 and a sealing portion 3343, where the pressing portion 3342 is disposed on the side of the sealing portion 3343 facing the valve cover 3324, the sealing portion 3343 is configured to seal the inlet hole 3322, and two ends of the elastic member 333 respectively abut against the valve cover 3324 and the pressing portion 3342, enabling the elastic member 333 to apply an elastic force to the sealing portion 3343 through the pressing portion 3342, thereby improving the uniformity of the elastic force applied by the elastic member 333 on the sealing portion 3343 and effectively enhancing the sealing effect of the sealing portion 3343 on the inlet hole 3322.

According to some embodiments of the present application, continuing to refer to FIG. 12 and FIG. 13, in the thickness direction X of the wall portion, the pressing portion 3342 is provided with a snap-fit groove 3342a on a side facing the sealing portion 3343, the sealing portion 3343 is provided with a snap-fit portion 3343a protrudingly provided on a side facing the pressing portion 3342, the snap-fit portion 3343a being inserted into the snap-fit groove 3342a and snap-fitted with the snap-fit groove 3342a. The sealing member 334 adopting such a structure can enhance the structural stability of the sealing portion 3343 disposed on the pressing portion 3342, reducing radial sliding of the sealing portion 3343 relative to the pressing portion 3342, thereby improving the sealing effect of the sealing portion 3343 on the inlet hole 3322 and reducing the likelihood of the intake inlet hole 3322 being inadvertently opened.

By way of example, the snap-fit portion 3343a is a circular columnar structure, and correspondingly, the snap-fit groove 3342a is a circular groove.

In some embodiments, the sealing portion 3343 is bonded to the pressing portion 3342. Adhesively bonding the sealing portion 3343 to the pressing portion 3342 not only enhances the structural stability of the sealing portion 3343 connected to the pressing portion 3342, reducing the risk of the sealing portion 3343 detaching from the pressing portion 3342 to improve the reliability of the sealing portion 3343 in sealing the inlet hole 3322, but also facilitates the assembly connection between the sealing portion 3343 and the pressing portion 3342, reducing the assembly difficulty between the sealing portion 3343 and the pressing portion 3342.

By way of example, the material of the sealing portion 3343 may include ethylene propylene diene monomer, fluororubber, or polytetrafluoroethylene. The sealing portion 3343 made of ethylene propylene diene monomer, fluororubber, or polytetrafluoroethylene exhibits good corrosion resistance, effectively alleviating corrosion of the sealing portion 3343 by the electrolyte, thereby improving the service life of the sealing portion 3343 and reducing the risk of compromised sealing performance of the sealing portion 3343 at the inlet hole 3322 due to corrosion of the sealing portion 3343.

It should be noted that, in some embodiments, the sealing member 334 may not include the pressing portion 3342, and the sealing member 334 includes only the sealing portion 3343, with an end of the elastic member 333 directly abutting against the sealing portion 3343.

According to some embodiments of the present application, referring to FIG. 14, where FIG. 14 is a partial cross-sectional view of a battery cell 20 according to some further embodiments of the present application, the one-way valve assembly 3 forms an exposed surface 32 at a position corresponding to the information collection hole 41, the one-way valve assembly 3 including a one-way valve 33, the one-way valve 33 being mounted on the wall portion 11, the one-way valve 33 having the discharge port 31. In the thickness direction X of the wall portion, the exposed surface 32 is formed at an end of the one-way valve 33 facing away from the electrode assembly 2.

The one-way valve 33 has a discharge port 31, meaning the discharge port 31 configured to connect to the outside of the housing 1 is disposed on the one-way valve 33.

In the thickness direction X of the wall portion, the exposed surface 32 is formed at the end of the one-way valve 33 facing away from the electrode assembly 2. This means that, in the thickness direction X of the wall portion, the one-way valve 33 is disposed in correspondence with the information collection hole 41 of the protective patch 4, such that the projection of the information collection hole 41 is located within the surface of the one-way valve 33 at the end facing away from the electrode assembly 2, and the region of the one-way valve 33 exposed by the information collection hole 41 is the exposed surface 32. That is, no covering member 34 is provided in the one-way valve assembly 3, such that the information collection hole 41 exposes a portion of the one-way valve 33, enabling an information code or a detection element for sampling to be provided on the one-way valve 33. It should be noted that the structure of the one-way valve 33 may be the same as the structure of the one-way valve 33 described above.

The one-way valve assembly 3 includes a one-way valve 33, and the one-way valve 33 has a discharge port 31, enabling the one-way valve 33 to directly discharge gas from inside the housing 1 through the discharge port 31. An exposed surface 32 is formed at an end of the one-way valve 33 facing away from the electrode assembly 2, with the projection of the information collection hole 41 of the protective patch 4 in the thickness direction X of the wall portion located directly within the one-way valve 33, such that the one-way valve 33 is disposed in correspondence with the information collection hole 41 in the thickness direction X of the wall portion, enabling an information code or connect a component such as a detection element for sampling to be provided directly on the region of the one-way valve 33 corresponding to the information collection hole 41. The structure is simple and easy to assemble, which is advantageous for reducing the assembly difficulty of the battery cell 20.

In some embodiments, referring to FIG. 14, the one-way valve 33 may include a valve body 332, an elastic member 333, and a sealing member 334. The valve body 332 is mounted on the wall portion 11, and a mounting cavity 3321 is formed inside the valve body 332, and the valve body 332 is provided with an inlet hole 3322 and the discharge port 31, with the inlet hole 3322 connecting the mounting cavity 3321 to the inside of the housing 1 and the discharge port 31 connecting the mounting cavity 3321 to the outside of the housing 1. The elastic member 333 is disposed within the mounting cavity 3321, the sealing member 334 is movably disposed within the mounting cavity 3321 and is configured to seal the inlet hole 3322 under the action of the elastic member 333 and to open the inlet hole 3322 under the action of gas inside the housing 1, and in the thickness direction X of the wall portion, the exposed surface 32 is formed at an end of the valve body 332 facing away from the electrode assembly 2.

The valve body 332 is provided with a discharge port 31, meaning the discharge port 31 configured to connect to the outside of the housing 1 is formed on the valve body 332.

The exposed surface 32 is formed at the end of the valve body 332 facing away from the electrode assembly 2, that is, the projection of the information collection hole 41 of the protective patch 4 in the thickness direction X of the wall portion is located within the surface of the valve body 332 at the end facing away from the electrode assembly 2, such that the region of the valve body 332 exposed by the information collection hole 41 forms the exposed surface 32.

In FIG. 14, the wall portion 11 is provided with a mounting hole 111, the one-way valve 33 is mounted within the mounting hole 111, and the mounting hole 111 penetrates through both sides of the wall portion 11 in the thickness direction X of the wall portion, meaning the mounting hole 111 directly extends through the first surface 112 and the surface of the wall portion 11 facing the electrode assembly 2, such that the mounting hole 111 is directly connected to the outside of the housing 1. It should be noted that the valve body 332 of the one-way valve 33 is welded to the wall surface of the mounting hole 111, the connection structure may be the same as the connection structure between the one-way valve 33 and the wall surface of the mounting hole 111 described above, and the mounting hole 111 may also have the same structure as the mounting hole 111 described above.

The one-way valve 33 includes a valve body 332, an elastic member 333, and a sealing member 334, where the valve body 332 is disposed on the wall portion 11, and the valve body 332 is provided with an inlet hole 3322 connecting the mounting cavity 3321 to the inside of the housing 1 and a discharge port 31 in communication with the outside of the housing 1. Both the elastic member 333 and the sealing member 334 are disposed within the mounting cavity 3321, enabling the elastic member 333 to apply an elastic force to the sealing member 334 to seal the inlet hole 3322, preventing gas outside the housing 1 from entering the inside of the housing 1. When the internal pressure of the housing 1 rises, gas inside the housing 1 can act on the sealing member 334 and overcome the elastic force of the elastic member 333, enabling the sealing member 334 to open the inlet hole 3322, thereby enabling gas inside the housing 1 to be discharged through the one-way valve 33, achieving the unidirectional exhaust function of the one-way valve 33. In addition, the exposed surface 32 is formed at the end of the valve body 332 facing away from the electrode assembly 2 in the thickness direction X of the wall portion, with the projection of the information collection hole 41 in the thickness direction X of the wall portion directly located on the valve body 332, resulting in a simple structure that is easy to implement.

In some embodiments, continuing to refer to FIG. 14, the valve body 332 may include a valve main body 3323 and a valve cover 3324. The valve main body 3323 is mounted on the wall portion 11, and the valve main body 3323 is provided with the inlet hole 3322 at an end close to the electrode assembly 2 in the thickness direction X of the wall portion. In the thickness direction X of the wall portion, the valve cover 3324 is connected to an end of the valve main body 3323 facing away from the electrode assembly 2, the valve cover 3324 has a third surface 3324b facing away from the electrode assembly 2, the third surface 3324b includes the exposed surface 32, the valve cover 3324 and the valve main body 3323 together enclose the mounting cavity 3321, the valve cover 3324 and the sealing member 334 are spaced apart, and two ends of the elastic member 333 respectively abut against the valve cover 3324 and the sealing member 334. The valve cover 3324 is provided with a vent hole 331, and the vent hole 331 is in communication with the mounting cavity 3321, with the discharge port 31 formed at an end of the vent hole 331 penetrating through the third surface 3324b.

The valve cover 3324 has a third surface 3324b facing away from the electrode assembly 2, the third surface 3324b including the exposed surface 32. This means that, in the thickness direction X of the wall portion, the valve cover 3324 is disposed in correspondence with the information collection hole 41 of the protective patch 4, such that the projection of the information collection hole 41 is located within the third surface 3324b of the valve cover 3324, and the region of the third surface 3324b exposed by the information collection hole 41 is the exposed surface 32.

The discharge port 31 is formed at an end of the vent hole 331 penetrating through the third surface 3324b, meaning the valve cover 3324 is provided with a vent hole 331 connecting the mounting cavity 3321 to the outside of the housing 1, and the vent hole 331 penetrates through the third surface 3324b, such that the end of the vent hole 331 penetrating through the third surface 3324b is the discharge port 31, that is, the protective patch 4 covers the vent hole 331 in the thickness direction X of the wall portion.

Of course, in other embodiments, the discharge port 31 formed on the valve body 332 may have other structures, for example, a third exhaust gap is formed between the valve cover 3324 and the valve main body 3323. The third exhaust gap is in communication with the mounting cavity 3321, and the discharge port 31 is formed at an end of the third exhaust gap away from the electrode assembly 2 in the thickness direction X of the wall portion. Specifically, in embodiments where the valve main body 3323 is provided with a recessed groove 3323a at an end, and the valve cover 3324 is mounted within the recessed groove 3323a, a third exhaust gap extending in the thickness direction X of the wall portion may be formed between the valve cover 3324 and the side surface of the recessed groove 3323a, such that the discharge port 31 is formed at an end of the third exhaust gap away from the electrode assembly 2 in the thickness direction X of the wall portion.

The valve body 332 is provided with a valve main body 3323 and a valve cover 3324. The valve cover 3324 is connected to the end of the valve main body 3323 facing away from the electrode assembly 2, forming the exposed surface 32 on the third surface 3324b of the valve cover 3324 facing away from the electrode assembly 2, meaning the projection of the information collection hole 41 in the thickness direction X of the wall portion is located within the third surface 3324b, which facilitates the formation of the exposed surface 32 on the valve body 332 and reduces the difficulty of forming the exposed surface 32 on the valve body 332. In addition, the vent hole 331 is provided on the valve cover 3324, with the discharge port 31 formed at an end of the vent hole 331 penetrating through the third surface 3324b of the valve cover 3324. The valve body 332 adopting such a structure can reduce interference of the vent hole 331 on the connection between the valve cover 3324 and the valve main body 3323, which is advantageous for reducing the assembly difficulty of the valve cover 3324 and the valve main body 3323. Similarly, a third exhaust gap is provided between the valve cover 3324 and the valve main body 3323, with the third exhaust gap forming the discharge port 31 at the end away from the electrode assembly 2 in the thickness direction X of the wall portion. The valve body 332 adopting such a structure facilitates coverage of the discharge port 31 by the protective patch 4 and helps reduce the difficulty of covering the discharge port 31 with the protective patch 4.

According to some embodiments of the present application, referring to FIG. 14, in the thickness direction X of the wall portion, the wall portion 11 has a first surface 112 facing away from the electrode assembly 2, the wall portion 11 is provided with a mounting hole 111, the mounting hole 111 penetrates through the first surface 112, and at least a portion of the valve main body 3323 is disposed within the mounting hole 111, where the third surface 3324b is flush with the first surface 112.

The third surface 3324b of the valve cover 3324 facing away from the electrode assembly 2 is configured to be flush with the first surface 112 of the wall portion 11 facing away from the electrode assembly 2, which is advantageous for further enhancing the aesthetic appearance of the outer surface of the battery cell 20 and facilitates the formation of the exposed surface 32 on the third surface 3324b of the valve cover 3324, and in addition, facilitates providing the protective patch 4 on the side of the wall portion 11 facing away from the electrode assembly 2, reducing the difficulty of assembling the protective patch 4 onto the wall portion 11.

In some embodiments, continuing to refer to FIG. 14, in the thickness direction X of the wall portion, the valve main body 3323 does not protrude beyond the first surface 112.

By way of example, the end face of the valve main body 3323 facing away from the electrode assembly 2 in the thickness direction X of the wall portion is flush with the first surface 112, and correspondingly, the end face of the valve main body 3323 in the thickness direction X of the wall portion at an end facing away from the electrode assembly 2 is provided with a recessed groove 3323a, with the valve cover 3324 mounted within the recessed groove 3323a, such that, in the thickness direction X of the wall portion, the third surface 3324b of the valve cover 3324 facing away from the electrode assembly 2 is flush with the end face of the valve main body 3323 in the thickness direction X of the wall portion at an end facing away from the electrode assembly 2.

The valve main body 3323 is configured to not protrude beyond the first surface 112 of the wall portion 11 facing away from the electrode assembly 2, thereby alleviating the issue of the valve main body 3323 protruding beyond the first surface 112 of the wall portion 11, which is advantageous for enhancing the aesthetic appearance of the outer surface of the battery cell 20, and in addition, can reduce interference of the valve main body 3323 on the protective patch 4, thereby lowering the difficulty of assembling the protective patch 4 onto the wall portion 11.

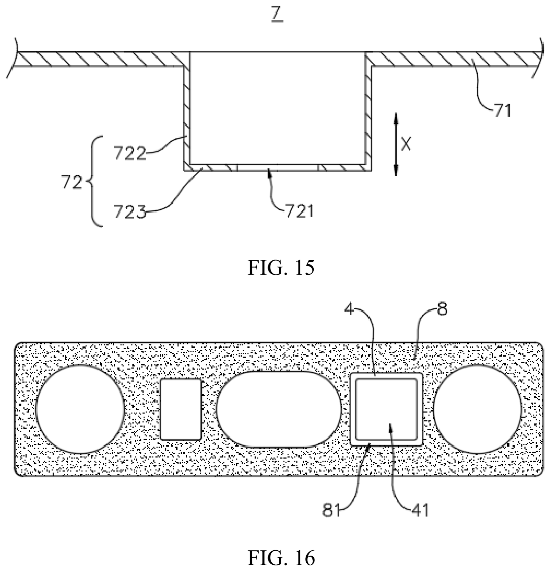

In some embodiments, referring to FIG. 4, FIG. 5, and FIG. 14, and further referring to FIG. 15, where FIG. 15 is a partial cross-sectional view of an insulating member 7 according to some embodiments of the present application, the battery cell 20 may further include an insulating member 7, the insulating member 7 being disposed on a side of the wall portion 11 facing the electrode assembly 2. In the thickness direction X of the wall portion, the valve body 332 of the one-way valve 33 protrudes beyond the surface of the wall portion 11 facing the electrode assembly 2. The insulating member 7 includes a main body portion 71 and an accommodating portion 72, where the main body portion 71 is disposed on the side of the wall portion 11 facing the electrode assembly 2, the accommodating portion 72 is connected to the main body portion 71, and a portion of the one-way valve 33 protruding beyond the surface of the wall portion 11 facing the electrode assembly 2 is accommodated within the accommodating portion 72.

The insulating member 7 is disposed on the side of the wall portion 11 facing the electrode assembly 2, serving to separate the wall portion 11 from the electrode assembly 2, thereby insulating and isolating the wall portion 11 and the electrode assembly 2.

By way of example, the material of the insulating member 7 may be various, such as rubber, silicone, or plastic.

The portion of the valve body 332 of the one-way valve 33 protruding beyond the surface of the wall portion 11 facing the electrode assembly 2 is accommodated within the accommodating portion 72, meaning the insulating member 7 forms an accommodating portion 72 corresponding to the position of the one-way valve 33, with the accommodating portion 72 covering the outer side of the portion of the valve body 332 of the one-way valve 33 protruding beyond the surface of the wall portion 11 facing the electrode assembly 2.

Optionally, the main body portion 71 and the accommodating portion 72 of the insulating member 7 may be of an integral structure or a separate structure. When the main body portion 71 and the accommodating portion 72 are an integral structure, they may be integrally formed through processes such as injection molding or milling. When the main body portion 71 and the accommodating portion 72 are a separate structure, the accommodating portion 72 may be connected to the main body portion 71 through adhesive bonding or snap-fitting. By way of example, in FIG. 15, the main body portion 71 and the accommodating portion 72 are an integral structure.

In some embodiments, referring to FIG. 5, FIG. 14, and FIG. 15, the accommodating portion 72 is provided with a through hole 721, the through hole 721 being connected to the inlet hole 3322 provided on the valve body 332.

The accommodating portion 72 is provided with a through hole 721, and the through hole 721 extends through the accommodating portion 72, enabling the through hole 721 to connect the inside of the accommodating portion 72 and the inside of the housing 1, such that the inlet hole 3322 of the valve body 332 can connect to the inside of the housing 1 through the through hole 721.

The through hole 721 is disposed on the accommodating portion 72, enabling the through hole 721 to connect the inside of the housing 1 to the inside of the accommodating portion 72 and enabling the inlet hole 3322 of the valve body 332 of the one-way valve 33 to connect to the inside of the housing 1 through the through hole 721, such that gas inside the housing 1 can enter the accommodating portion 72 through the through hole 721 and then be discharged through the one-way valve 33 to the outside of the housing 1. This eliminates the need for gas to pass through a gap between the main body portion 71 and the wall portion 11 to enter the accommodating portion 72 before being discharged through the one-way valve 33, which is advantageous for improving the smoothness of gas discharge from inside the housing 1 through the one-way valve 33.

In some embodiments, referring to FIG. 5, FIG. 14, and FIG. 15, in the thickness direction X of the wall portion, the inlet hole 3322 is disposed at an end of the valve body 332 facing the electrode assembly 2. The accommodating portion 72 includes a first wall 722 and a second wall 723, where the first wall 722 surrounds the valve body 332, in the thickness direction X of the wall portion, an end of the first wall 722 is connected to the main body portion 71, the second wall 723 is connected to an end of the first wall 722 away from the main body portion 71, and the through hole 721 is provided on the second wall 723.

The first wall 722 surrounds the valve body 332, meaning the first wall 722 of the accommodating portion 72 is an annular structure surrounding the valve body 332.

An end of the first wall 722 is connected to the main body portion 71, and the second wall 723 is connected to an end of the first wall 722 away from the main body portion 71, that is, the second wall 723 is connected to the main body portion 71 through the first wall 722, and the first wall 722 and the second wall 723 together enclose the accommodating portion 72 for accommodating the portion of the valve body 332. The second wall 723 is a wall of the accommodating portion 72 that faces the inlet hole 3322.

The through hole 721 is provided on the second wall 723, meaning the through hole 721 is provided on the end of the accommodating portion 72 facing the electrode assembly 2. Of course, in other embodiments, the through hole 721 may be provided on the first wall 722, meaning the through hole 721 is provided on a side of the accommodating portion 72 in the radial direction of the accommodating portion 72.

The accommodating portion 72 is provided with a first wall 722 and a second wall 723 connected to each other, where the first wall 722 surrounds the valve body 332, and the second wall 723 is located at an end of the valve body 332 facing the electrode assembly 2 in the thickness direction X of the wall portion, such that the first wall 722 and the second wall 723 together enclose the accommodating portion 72 for accommodating the portion of the valve body 332 extending into the inside of the housing 1. The through hole 721 of the accommodating portion 72 is provided in the first wall 722, which is advantageous for increasing the path for gas to enter the inlet hole 3322 of the valve body 332 from the through hole 721, thereby alleviating the overflow of electrolyte along with the gas. The through hole 721 of the accommodating portion 72 is provided on the second wall 723, which is advantageous for the provision of the inlet hole 3322 in correspondence with the through hole 721, enhancing the smoothness of gas discharge from inside the housing 1 through the one-way valve 33.

According to some embodiments of the present application, referring to FIG. 5, FIG. 6, and FIG. 14, and further referring to FIG. 16, where FIG. 16 is a schematic diagram of the connection between a protective patch 4 and an adhesive layer 8 according to some embodiments of the present application, the protective patch 4 is provided with an adhesive layer 8 at its side facing the wall portion 11, the adhesive layer 8 bonding the protective patch 4 to the wall portion 11, where the adhesive layer 8 is provided with a first clearance hole 81 at a position corresponding to the information collection hole 41, and in the thickness direction X of the wall portion, projections of the information collection hole 41 and the discharge port 31 are both located within the first clearance hole 81.

The adhesive layer 8 serves to bond the protective patch 4 to the wall portion 11. By way of example, the adhesive layer 8 may be glue or double-sided tape disposed between the protective patch 4 and the wall portion 11.

In the thickness direction X of the wall portion, the projections of the information collection hole 41 and the discharge port 31 are both located within the first clearance hole 81, meaning the region defined by the projection of the first clearance hole 81 in a plane perpendicular to the thickness direction X of the wall portion covers the information collection hole 41 and the discharge port 31, that is, the first clearance hole 81 can provide clearance for the information collection hole 41 and the discharge port 31 in the thickness direction X of the wall portion.

By way of example, in FIG. 5 and FIG. 6, the exhaust passage 35 includes a first exhaust gap 351. The first exhaust gap 351 is formed between the covering member 34 and the side surface of the mounting groove 113, and the discharge port 31 is formed at the end of the first exhaust gap 351 in communication with the outside of the housing 1. Correspondingly, the projections of the mounting groove 113 and the covering member 34 in the thickness direction X of the wall portion are located within the first clearance hole 81, enabling the first clearance hole 81 to provide clearance for the mounting groove 113 and the covering member 34.

By way of example, in FIG. 14, the discharge port 31 is formed at an end of the vent hole 331 on the valve cover 3324 of the valve body 332 of the one-way valve 33, and correspondingly, the projection of the vent hole 331 in the thickness direction X of the wall portion is located within the first clearance hole 81, enabling the first clearance hole 81 to provide clearance for the vent hole 331.

The region defined by the projection of the first clearance hole 81 in the thickness direction X of the wall portion covers the information collection hole 41 and the mounting groove 113. Since the projection of the information collection hole 41 in the thickness direction X of the wall portion is located within the covering member 34, the area of the first clearance hole 81 is larger than the area of the mounting groove 113, and the area of the mounting groove 113 is larger than the area of the information collection hole 41.

The adhesive layer 8 is provided on the side of the protective patch 4 facing the wall portion 11, enabling the protective patch 4 to be bonded to the wall portion 11 through the adhesive layer 8, which is advantageous for reducing the assembly difficulty of the protective patch 4 and enhancing the connection stability of the protective patch 4 on the wall portion 11. In addition, the first clearance hole 81 is disposed at the position of the adhesive layer 8 corresponding to the information collection hole 41, with the projections of the information collection hole 41 of the protective patch 4 and the discharge port 31 of the one-way valve assembly 3 in the thickness direction X of the wall portion both located within the first clearance hole 81, to reduce obstruction of the adhesive layer 8 on the discharge port 31, such that gas discharged through the discharge port 31 of the one-way valve assembly 3 can pass through the gap between the protective patch 4 and the wall portion 11 into the information collection hole 41 and then be discharged, thereby reducing the impact on exhaust through the one-way valve assembly 3 while enabling the protective patch 4 to be bonded to the wall portion 11.

According to some embodiments of the present application, referring to FIG. 3 and FIG. 4, the housing 1 may include a casing 12 and an end cover 13. An accommodation cavity with an opening 121 is formed within the casing 12, the accommodation cavity being configured to accommodate the electrode assembly 2. The end cover 13 closes the opening 121, and the end cover 13 is the wall portion 11.

The end cover 13 is the wall portion 11, that is, the one-way valve 33 is disposed on the end cover 13.

It should be noted that the structure of the battery cell 20 is not limited thereto. In some embodiments, the battery cell 20 may alternatively be of other structures. For example, the casing 12 includes the wall portion 11, that is, the one-way valve 33 is mounted on one wall of the casing 12. The one-way valve 33 may be mounted on the bottom wall of the casing 12 opposite the end cover 13 or on a side wall of the casing 12 adjacent to and connected with the end cover 13.

The wall portion 11 of the housing 1 is configured as the end cover 13 of the housing 1 configured to close the opening 121 of the casing 12, facilitating the mounting of the one-way valve 33 on the end cover 13 for the battery cell 20 adopting such a structure, which is advantageous for reducing the assembly difficulty of the battery cell 20 and improving its production efficiency. Similarly, the wall portion 11 of the housing 1 is configured as one wall of the casing 12, enabling the battery cell 20 adopting such a structure to reduce the impact of stresses generated by the connection between the end cover 13 and the casing 12 on the one-way valve 33, alleviating issues such as damage to the one-way valve 33, thereby enhancing the operational stability and service life of the battery cell 20.

According to some embodiments of the present application, referring to FIG. 3 and FIG. 4, the battery cell 20 further includes a pressure relief mechanism 6. The pressure relief mechanism 6 is disposed on the housing 1 and configured to actuate and release internal pressure of the battery cell 20 during thermal runaway of the battery cell 20, the actuation pressure of the pressure relief mechanism 6 being greater than the opening pressure of the one-way valve 33.

The pressure relief mechanism 6 is disposed on the housing 1, and may be on the end cover 13 or the casing 12. By way of example, in FIG. 4, the pressure relief mechanism 6 is disposed on the end cover 13.

The pressure relief mechanism 6 is configured to actuate and release internal pressure of the battery cell 20 during thermal runaway of the battery cell 20, meaning when thermal runaway occurs inside the battery cell 20, the pressure relief mechanism 6 can actuate and open to release gas and the like generated due to thermal runaway inside the battery cell 20.

The actuation pressure of the pressure relief mechanism 6 is greater than the opening pressure of the one-way valve 33, meaning the pressure required for the gas inside the housing 1 to open the pressure relief mechanism 6 is greater than the pressure required for the gas inside the housing 1 to open the one-way valve 33. It should be noted that during thermal runaway of the battery cell 20, the gas inside the housing 1 of the battery cell 20 increases rapidly, thereby opening the pressure relief mechanism 6 to release pressure. In contrast, during normal use of the battery cell 20, when the gas generated inside the housing 1 reaches a threshold, the one-way valve 33 can be opened, but the pressure relief mechanism 6 cannot be opened.

Optionally, the pressure relief mechanism 6 may be integrally formed with the housing 1 or separately provided. If the pressure relief mechanism 6 is integrally formed with the housing 1, the pressure relief mechanism 6 may be a region of the housing 1 with a weakened structure, such as a region with a scored groove on the housing 1. If the pressure relief mechanism 6 is separately provided from the housing 1, it may be connected to the housing 1 through welding, hot melting, injection molding, or adhesive bonding. By way of example, in FIG. 4, the pressure relief mechanism 6 is a separately provided structure from the housing 1 and is disposed on the end cover 13 of the housing 1. The pressure relief mechanism 6 may be a pressure relief component such as an explosion-proof valve, explosion-proof disc, pressure relief valve, or safety valve.

By way of example, in FIG. 4, both the electrode terminals 5 and the pressure relief mechanism 6 are disposed on the end cover 13. Of course, in other embodiments, the electrode terminals 5 and the pressure relief mechanism 6 may be disposed on different walls of the housing 1, for example, the pressure relief mechanism 6 may be disposed on the casing 12, and the electrode terminals 5 may be disposed on the end cover 13.

The opening pressure of the one-way valve 33 for exhaust is set to be less than the actuation pressure of the pressure relief mechanism 6 for pressure relief, enabling gas generated inside the housing 1 during normal operation of the battery cell 20 to be discharged to the outside of the housing 1 through the one-way valve 33. This mitigates the issue that the pressure relief mechanism 6 actuates prematurely before thermal runaway occurs in the battery cell 20 due to rising internal gas pressure of the battery cell 20, thereby effectively enhancing the operational stability of the battery cell 20 and improving the service life and operational reliability of the battery cell 20.

In some embodiments, the one-way valve 33 and the pressure relief mechanism 6 may be disposed on the same wall of the housing 1, for example, both the one-way valve 33 and the pressure relief mechanism 6 are disposed on the end cover 13.

In some embodiments, the one-way valve 33 and the pressure relief mechanism 6 may be disposed on different walls of the housing 1, for example, the one-way valve 33 is disposed on the end cover 13, and the pressure relief mechanism 6 is disposed on the casing 12.

In some embodiments, the exhaust rate of the one-way valve 33 is less than the exhaust rate of the pressure relief mechanism 6.

The exhaust rate of the one-way valve 33 is set to be less than the exhaust rate of the pressure relief mechanism 6, alleviating the issue of the pressure relief mechanism 6 failing to actuate and open due to excessively rapid exhaust through the one-way valve 33 during thermal runaway of the battery cell 20. This enables the pressure relief mechanism 6 to actuate and stably release internal pressure of the battery cell 20 during thermal runaway of the battery cell 20, thereby reducing the risk of fire or explosion in the battery cell 20 during thermal runaway.

In some embodiments, the battery cell 20 is an alkali metal battery, such as a sodium metal battery or a lithium metal battery. An alkali metal battery provided with the one-way valve assembly 3 can discharge gas generated during normal operation of the alkali metal battery in a timely manner, improving the service life of the alkali metal battery.

According to some embodiments of the present application, the present application further provides a battery 100, the battery 100 including the battery cell 20 described in any of the above embodiments.

Referring to FIG. 2, the battery 100 may further include a box 10, with the battery cells 20 accommodated within the box 10. In some embodiments, the box 10 may include a first box body 101 and a second box body 102, where the first box body 101 and the second box body 102 cover each other, jointly defining an assembly space for accommodating the battery cells 20.

Optionally, in FIG. 2, the second box body 102 may be a hollow structure with one open end, and the first box body 101 may be a plate-like structure, covering the open side of the second box body 102, such that the first box body 101 and the second box body 102 jointly define the assembly space. Of course, the structure of the box 10 is not limited thereto. In other embodiments, both the first box body 101 and the second box body 102 may be hollow structures with one open side, with the open side of the first box body 101 covering the open side of the second box body 102.

Of course, the box 10 formed by the first box body 101 and the second box body 102 may have various shapes, such as a cylinder or a cuboid. By way of example, in FIG. 2, the box 10 is a cuboid structure.

In some embodiments, one or more battery cells 20 may be disposed within the box 10. By way of example, in FIG. 2, the box 10 of the battery 100 contains a plurality of battery cells 20, which may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Of course, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10.

The battery 100 may further include other structures. For example, the battery 100 may further include a busbar connecting a plurality of battery cells 20 to implement electrical connection between the plurality of battery cells 20.

It should be noted that, in some embodiments, the battery 100 may not include a box 10, and the battery 100 includes a plurality of battery cells 20, and the battery 100 formed by the plurality of battery cells 20 is directly assembled onto an electric apparatus to supply electrical energy to the electric apparatus through the plurality of battery cells 20, that is, the box 10 may be part of the electric apparatus. Taking the electric apparatus as a vehicle 1000 as an example, the box 10 may form part of the chassis structure of the vehicle 1000, for example, a portion of the box 10 may form at least part of the floor of the vehicle 1000, or a portion of the box 10 may form at least part of the crossbeams and longitudinal beams of the vehicle 1000.

According to some embodiments of the present application, the present application further provides an electric apparatus including the battery cell 20 described in any of the above embodiments, the battery cell 20 being configured to supply electrical energy to an electric apparatus.

The electric apparatus may be any of the aforementioned devices or systems using the battery cell 20.

According to some embodiments of the present application, referring to FIG. 3 to FIG. 13 and FIG. 15 to FIG. 16, the present application provides a battery cell 20 including a housing 1, an electrode assembly 2, a one-way valve assembly 3, a protective patch 4, and an insulating member 7. The housing 1 has a wall portion 11, the housing 1 including a casing 12 and an end cover 13. An accommodation cavity with an opening 121 is formed within the casing 12, and the electrode assembly 2 is accommodated within the accommodation cavity. The end cover 13 closes the opening 121, and the end cover 13 is the wall portion 11. In the thickness direction X of the wall portion, the wall portion 11 has a first surface 112 facing away from the electrode assembly 2, the first surface 112 is provided with a mounting groove 113, and a bottom surface of the mounting groove 113 is provided with a mounting hole 111. The one-way valve assembly 3 includes a one-way valve 33 and a covering member 34, where the one-way valve 33 is mounted within the mounting hole 111 and protrudes beyond the surface of the wall portion 11 facing the electrode assembly 2, and the one-way valve 33 is configured to release gas from inside the housing 1. The one-way valve 33 includes a valve body 332, an elastic member 333, and a sealing member 334. A portion of the valve body 332 is mounted within the mounting hole 111, a mounting cavity 3321 is formed inside the valve body 332, and the valve body 332 is provided with an inlet hole 3322 and a vent hole 331, with the inlet hole 3322 connecting the mounting cavity 3321 to the inside of the housing 1 and the vent hole 331 connecting the mounting cavity 3321 to the exhaust passage 35. The elastic member 333 is disposed within the mounting cavity 3321, and the sealing member 334 is movably disposed within the mounting cavity 3321 and is configured to seal the inlet hole 3322 under the action of the elastic member 333 and to open the inlet hole 3322 under the action of gas inside the housing 1. The valve body 332 includes a valve main body 3323 and a valve cover 3324, and the valve main body 3323 is disposed within the mounting hole 111 and provided with the inlet hole 3322 at an endfacing the electrode assembly 2. In the thickness direction X of the wall portion, the valve cover 3324 is connected to an end of the valve main body 3323 facing away from the electrode assembly 2, and the valve cover 3324 and the valve main body 3323 together encloses the mounting cavity 3321. The valve cover 3324 is provided with the vent hole 331, the valve cover 3324 and the sealing member 334 are spaced apart, two ends of the elastic member 333 respectively abut against the valve cover 3324 and the sealing member 334, and the inlet hole 3322 is disposed on a bottom surface of the mounting cavity 3321. The material of the covering member 34 is the same as that of the wall portion 11, the covering member 34 being disposed within the mounting groove 113. The covering member 34 has a second surface 341 facing away from the electrode assembly 2, the second surface 341 being flush with the first surface 112. In the thickness direction X of the wall portion, the covering member 34 is located at an end of the one-way valve 33 facing away from the electrode assembly 2, and the covering member 34 covers the one-way valve 33. An exhaust passage 35 is formed between the covering member 34 and the wall portion 11, the exhaust passage 35 including a first exhaust gap 351 and a second exhaust gap 352. The first exhaust gap 351 is formed between the covering member 34 and a side surface of the mounting groove 113, and the discharge port 31 is formed at an end of the first exhaust gap 351 connected to the outside of the housing 1. The covering member 34 and the mounting groove 113 have a rectangular cross-section perpendicular to the thickness direction X of the wall portion. The outer peripheral surface of the covering member 34 includes four first corner surfaces 342 and four first side surfaces 343, each pair of adjacent first side surfaces 343 being connected by one first corner surface 342. The bottom surface of the mounting groove 113 includes four second corner surfaces 1131 and four second side surfaces 1132, each pair of adjacent second side surfaces 1132 being connected by one second corner surface 1131. Each first side surface 343 abuts against and is welded to a corresponding second side surface 1132, and a first exhaust gap 351 is formed between each first corner surface 342 and a corresponding second corner surface 1131. The first corner surface 342 and the second corner surface 1131 are both arcuate surfaces, the radius of the first corner surface 342 being greater than the radius of the second corner surface 1131. In the thickness direction X of the wall portion, the covering member 34 has a third surface 3324b facing the one-way valve 33, the third surface 3324b overlapping the bottom surface of the mounting groove 113. The third surface 3324b is provided with four first grooves 3441, each first groove 3441 extending along the radial direction of the covering member 34 and penetrating through one first corner surface 342. The second exhaust gap 352 is formed between the bottom surface of the first groove 3441 and the bottom surface of the mounting groove 113. The third surface 3324b is further provided with a second groove 3442, and the plurality of first grooves 3441 are disposed around the second groove 3442 and each connected to the second groove 3442, the second groove 3442 being connected to the vent hole 331. In the thickness direction X of the wall portion, the vent hole 331 faces the second groove 3442, and a projection of the vent hole 331 is located within the second groove 3442. The protective patch 4 is disposed on a side of the wall portion 11 facing away from the electrode assembly 2, the protective patch 4 is provided with an information collection hole 41 penetrating through the protective patch 4, and the projection of the information collection hole 41 in the thickness direction X of the wall portion is located within the second surface 341 of the covering member 34. The region of the second surface 341 exposed by the information collection hole 41 forms an exposed surface 32, the exposed surface 32 being a flat surface and flush with the first surface 112. The protective patch 4 covers the discharge port 31. An adhesive layer 8 is provided at an side of the protective patch 4 facing the wall portion 11, the adhesive layer 8 bonding the protective patch 4 to the wall portion 11, where the adhesive layer 8 is provided with a first clearance hole 81 at a position corresponding to the information collection hole 41, and in the thickness direction X of the wall portion, projections of the information collection hole 41, the mounting groove 113, and the covering member 34 are all located within the first clearance hole 81. The insulating member 7 includes a main body portion 71 and an accommodating portion 72, where the main body portion 71 is disposed on a side of the wall portion 11 facing the electrode assembly 2, the accommodating portion 72 is connected to the main body portion 71, and a portion of the one-way valve 33 extending into the inside of the housing 1 is accommodated within the accommodating portion 72. The accommodating portion 72 includes a first wall 722 and a second wall 723, where the first wall 722 surrounds the valve body 332, in the thickness direction X of the wall portion, an end of the first wall 722 is connected to the main body portion 71, the second wall 723 is connected to an end of the first wall 722 away from the main body portion 71, and the second wall 723 is provided with a through hole 721, the through hole 721 connecting the inlet hole 3322 to the inside of the housing 1.

It should be noted that, without conflict, the embodiments in the present application and the features in the embodiments may be combined with each other.

The above are only preferred embodiments of the present application and are not intended to limit the present application. For those skilled in the art, various modifications and changes may be made to the present application. Any modifications, equivalent replacements, improvements, and the like made within the spirit and principles of the present application shall be included within the protection scope of the present application.

## Claims

1. A battery cell, comprising:
a housing having a wall portion;
an electrode assembly accommodated within the housing;
a one-way valve assembly disposed on the wall portion, wherein the one-way valve assembly has a discharge port, and the discharge port is configured to discharge gas from inside the housing; and
a protective patch disposed on a side of the wall portion facing away from the electrode assembly;
wherein the protective patch is provided with an information collection hole penetrating through the protective patch, a projection of the information collection hole in a thickness direction of the wall portion is located within the one-way valve assembly, and the protective patch covers the discharge port.

2. The battery cell according to claim 1, wherein the one-way valve assembly forms an exposed surface at a position corresponding to the information collection hole, the exposed surface being a flat surface.

3. The battery cell according to claim 2, wherein in the thickness direction of the wall portion, the wall portion has a first surface facing away from the electrode assembly, the first surface being flush with the exposed surface.

4. The battery cell according to any one of claims 1 to 3, wherein the one-way valve assembly forms an exposed surface at a position corresponding to the information collection hole, and the one-way valve assembly comprises:
a one-way valve mounted on the wall portion, wherein the one-way valve has a vent hole, the vent hole being configured to discharge gas from inside the housing; and
a covering member connected to the wall portion, wherein in the thickness direction of the wall portion, the covering member is located at an end of the one-way valve facing away from the electrode assembly, the covering member covers the one-way valve, and the covering member has a second surface facing away from the one-way valve, the second surface comprising the exposed surface;
wherein an exhaust passage is formed between the covering member and the wall portion, the exhaust passage is in communication with the vent hole, and the discharge port in communication with the outside of the housing is formed at an end of the exhaust passage.

5. The battery cell according to claim 4, wherein in the thickness direction of the wall portion, the wall portion has a first surface facing away from the electrode assembly, the first surface is provided with a mounting groove, a bottom surface of the mounting groove is provided with a mounting hole, at least a portion of the one-way valve is mounted within the mounting hole, and at least a portion of the covering member is accommodated within the mounting groove.

6. The battery cell according to claim 5, wherein the exhaust passage comprises a first exhaust gap formed between the covering member and a side surface of the mounting groove, with the discharge port formed at an end of the first exhaust gap away from the electrode assembly in the thickness direction of the wall portion.

7. The battery cell according to claim 6, wherein the exhaust passage further comprises a second exhaust gap formed between the covering member and the bottom surface of the mounting groove, with the second exhaust gap connecting the first exhaust gap to the vent hole.

8. The battery cell according to any one of claims 5 to 7, wherein in the thickness direction of the wall portion, the covering member does not protrude beyond the first surface.

9. The battery cell according to claim 8, wherein the first surface is flush with the second surface.

10. The battery cell according to any one of claims 4 to 9, wherein the one-way valve comprises:
a valve body mounted on the wall portion, wherein a mounting cavity is formed inside the valve body, and the valve body is provided with an inlet hole and the vent hole, with the inlet hole connecting the mounting cavity to the inside of the housing and the vent hole connecting the mounting cavity to the exhaust passage;
an elastic member disposed within the mounting cavity; and
a sealing member movably disposed within the mounting cavity, the sealing member being configured to seal the inlet hole under the action of the elastic member and to open the inlet hole under the action of gas inside the housing.

11. The battery cell according to claim 10, wherein the valve body comprises:
a valve main body mounted on the wall portion, wherein the valve main body is provided with the inlet hole at an end close to the electrode assembly in the thickness direction of the wall portion; and
a valve cover, wherein in the thickness direction of the wall portion, the valve cover is connected to an end of the valve main body facing away from the electrode assembly, the valve cover and the valve main body together enclose the mounting cavity, the valve cover and the sealing member are spaced apart, two ends of the elastic member respectively abut against the valve cover and the sealing member, and the valve cover is provided with the vent hole.

12. The battery cell according to any one of claims 1 to 3, wherein the one-way valve assembly forms an exposed surface at a position corresponding to the information collection hole, and the one-way valve assembly comprises a one-way valve, the one-way valve is mounted on the wall portion, the one-way valve having the discharge port;
wherein in the thickness direction of the wall portion, the exposed surface is formed at an end of the one-way valve facing away from the electrode assembly.

13. The battery cell according to claim 12, wherein the one-way valve comprises:
a valve body mounted on the wall portion, wherein a mounting cavity is formed inside the valve body, and the valve body is provided with an inlet hole and the discharge port, with the inlet hole connecting the mounting cavity to the inside of the housing and the discharge port connecting the mounting cavity to the outside of the housing;
an elastic member disposed within the mounting cavity; and
a sealing member movably disposed within the mounting cavity, the sealing member being configured to seal the inlet hole under the action of the elastic member and to open the inlet hole under the action of gas inside the housing;
wherein in the thickness direction of the wall portion, the exposed surface is formed at an end of the valve body facing away from the electrode assembly.

14. The battery cell according to claim 13, wherein the valve body comprises:
a valve main body mounted on the wall portion, wherein the valve main body is provided with the inlet hole at an end close to the electrode assembly in the thickness direction of the wall portion; and
a valve cover, wherein in the thickness direction of the wall portion, the valve cover is connected to an end of the valve main body facing away from the electrode assembly, the valve cover has a third surface facing away from the electrode assembly, the third surface comprises the exposed surface, the valve cover and the valve main body together enclose the mounting cavity, the valve cover and the sealing member are spaced apart, and two ends of the elastic member respectively abut against the valve cover and the sealing member;
wherein the valve cover is provided with a vent hole, the vent hole is in communication with the mounting cavity, and the discharge port is formed at an end of the vent hole penetrating through the third surface; or
a third exhaust gap is formed between the valve cover and the valve main body, the third exhaust gap is in communication with the mounting cavity, and the discharge port is formed at an end of the third exhaust gap away from the electrode assembly in the thickness direction of the wall portion.

15. The battery cell according to claim 14, wherein in the thickness direction of the wall portion, the wall portion has a first surface facing away from the electrode assembly, the wall portion is provided with a mounting hole, the mounting hole penetrates through the first surface, and at least a portion of the valve main body is mounted within the mounting hole;
wherein the third surface is flush with the first surface.

16. The battery cell according to claim 15, wherein in the thickness direction of the wall portion, the valve main body does not protrude beyond the first surface.

17. The battery cell according to any one of claims 1 to 16, wherein the protective patch is provided with an adhesive layer at its side facing the wall portion, the adhesive layer bonding the protective patch to the wall portion;
wherein the adhesive layer is provided with a first clearance hole at a position corresponding to the information collection hole, and in the thickness direction of the wall portion, projections of the information collection hole and the discharge port are both located within the first clearance hole.

18. The battery cell according to any one of claims 1 to 17, wherein the housing comprises:
a casing, wherein an accommodation cavity with an opening is formed within the casing, the accommodation cavity being configured to accommodate the electrode assembly; and
an end cover closing the opening;
wherein the end cover is the wall portion; or
the casing comprises the wall portion.

19. A battery comprising the battery cell according to any one of claims 1 to 18.

20. An electric apparatus comprising the battery cell according to any one of claims 1 to 18, the battery cell being configured to supply electrical energy.
